# EUROPEAN PATENT SPECIFICATION

(11) **EP 4 478 210 B1**
(45) Date of publication and mention of the grant of the patent: **03.06.2026**
(21) Application number: 24182076.0
(22) Date of filing: 13.06.2024
(51) Int. Cl.: G06F 16/2455

(54) **REAL-TIME SIGNAL DISCOVERY**
ECHTZEIT-SIGNALERKENNUNG
DÉCOUVERTE DE SIGNAL EN TEMPS RÉEL

(30) Priority: 14.06.2023 GB 202308875; 03.07.2023 US 202318217837
(43) Date of publication of application: 18.12.2024
(73) Proprietor: CRFS Limited, Cambridge CB23 7FW (GB)
(72) Inventor: Hyde, William, Cambridge, CB23 7FW (GB)
(74) Representative: Wojakiewicz, Aleksandra

(56) References cited:
- EP-A1- 3 007 081
- US-A1- 2023 086 812
- YANG YANG ET AL: "EdgeDB: An Efficient Time-Series Database for Edge Computing", IEEE ACCESS, vol. 7, 26 September 2019 (2019-09-26), pages 142295 - 142307, XP011749605, DOI: 10.1109/ACCESS.2019.2943876
- MICHAIL VLACHOS ET AL: "Indexing Multidimensional Time-Series", VLDB JOURNAL, SPRINGER VERLAG, BERLIN, DE, vol. 15, no. 1, 22 July 2005 (2005-07-22), pages 1 - 20, XP058202240, ISSN: 1066-8888, DOI: 10.1007/S00778-004-0144-2

## Description

### Background

When large volumes of data (e.g. hundreds of Gb or more than 1Tb) are collected, methods for analysing and displaying the data can be used to assist a user in finding and/or reviewing desired data. For example, a dataset might include gigabytes, terabytes or petabytes of raw data. Methods of data-reduction employed may include pre-processing, index building, and hierarchical searching.

For example, US 8 078 394 B2 describes processing Global Positioning System, GPS, data into a track of spatially-partitioned segments such that each segment has a cell. Each cell has an associated temporal index into which data for the segments of the cell are inserted.

In another example, G. Noël et. al. "The Po-tree: a Real-time Spatiotemporal Data Indexing Structure", Developments in Spatial Data Handling 2005, pp 259-270, 11th International Symposium on Spatial Data Handling, describes indexing measurement data from sensors using a KD tree index for the sensor locations, with spatial nodes corresponding to each sensor linked to a modified B+ tree time index structure for measurements from that sensor.

EP 3007081 B1 describes methods employing a spatial tree index linked to a number of time tree indices.

In other applications, a spatial component of indexing may be omitted and only temporal indexing may be needed.

This problem may be particularly acute in the area of broad-spectrum radio monitoring and analysis. WO 2021/171018 A1 describes methods enabling indexing, aggregation and even browsing of time series of data, including radio IQ data, in real-time without interrupting reception and storage of the time series of data.

YANG YANG ET AL: "EdgeDB: An Efficient Time-Series Database for Edge Computing", IEEE ACCESS, vol. 7, 26 September 2019 (2019-09-26), pages 142295-142307, DOI: 10.1109/ACCESS.2019.2943876, describes that time-series data streams from high-sampling-frequency sensors in Internet of Things (IoT) can overwhelm the networks connecting the sensors to centralized clouds. The authors propose a time-series database, called EdgeDB, to fully utilize the capacity of the edge nodes. The database is described to effectively improve the performances of both inserting and retrieving data from ingest streams by efficiently merging multiple streams and optimizing the storage data structure concurrently. The database is described to first compactly organizes multiple online streams into a tablet within a time window and to embed predefined aggregate query results together. The database is described to adopt Time Partitioned Elastic Index (TPEI) to build indexing on all tablets, intended to enhance the time-range query performance while reducing the memory usage by optimizing the indexing storage. The database is described to further develop Time Merged Tree (TMTree) to combine a set of tablets into a large one, described to significantly boost the write throughput and to potentially strengthen the performance of inter-tablet query. Experiments based on real-world datasets are described to performance improvements of up in insert throughput, in write throughput, and in query latency with lower memory consumption.

MICHAIL VLACHOS ET AL: "Indexing Multidimensional Time-Series", VLDB JOURNAL, SPRINGER VERLAG, BERLIN, DE, vol. 15, no. 1, 22 July 2005 (2005-07-22), pages 1-20, ISSN: 1066-8888, DOI: 10.1007/S00778-004-0144-2, describes an index structure that can support multiple distance measures. A specific area of interest is described to be the efficient retrieval and analysis of similar trajectories. Trajectory datasets are described to be very common in environmental applications, mobility experiments, and video surveillance and to be especially important for the discovery of certain biological patterns. A primary similarity measure is described to be based on the longest common subsequence (LCSS) model that is described to offer enhanced robustness, particularly for noisy data, which are encountered very often in real-world applications. The index is described to be able to accommodate other distance measures as well, including the ubiquitous Euclidean distance and the increasingly popular dynamic time warping (DTW). A major contribution of our work is described to be the ability to support all these measures without the need to restructure the index. The framework is described to guarantee no false dismissals, and to be tailorable to provide much faster response times at the expense of slightly reduced precision/recall. The experimental results are described to demonstrate that the index can help speed up the computation of expensive similarity measures such as the LCSS and the DTW.

### Summary

According to a first aspect of the invention, there is provided a method including receiving a time series of radio data. The method also includes, for each of a plurality of buffer periods, at the end of a most recently elapsed buffer period, analysing the radio data of that buffer period to detect signals. The method also includes, in response to detecting one or more signals ending within that buffer period, determining a start time and an end time of that signal, and one or more signal properties corresponding to that signal, the signal properties including at least a duration, and storing that signal to a detailed database and a summary database. The detailed database includes a plurality of levels. Each level includes one or more detailed nodes, the detailed nodes within each level sub-dividing time into consecutive detailed node periods. Storing a signal to the detailed database includes storing the signal properties corresponding to that signal into the lowest level available detailed node corresponding to a detailed node time period encompassing the start time and end time of that signal. The summary database includes an auxiliary database and a tree-structure of summary nodes having a plurality of levels. The summary nodes at each level correspond to consecutive summary node periods of equal length. Each summary node stores a summary data structure which stores, for each unique combination of quantised signal property values, a count of the number of signals corresponding to the respective summary node period which have that unique combination of quantised signal property values. Storing a signal to the summary database includes, at each level of the summary database, updating, based on the signal properties, the summary data structures of one or more summary nodes having summary node periods overlapping the duration of that signal, or storing the signal properties corresponding to that signal in the auxiliary database.

The method is computer implemented. The method may be executed by a data processing apparatus including one or more digital electronic processors communicatively coupled to random-access memory and computer readable storage. The data processing apparatus may also include one or more radio receivers which receive the time series of data.

The summary database may include, or take the form of, a binary tree index. The summary database may include, or take the form of, a trinary tree index. The summary database may include, or take the form of, a ternary tree index. The summary database may include, or take the form of, an *N*-ary tree index, in other words, each summary node may have a number, *N*, of descendent (or child) nodes in the level below.

The auxiliary database may have the same structure as the detailed database.

The leaf node period corresponding to each summary node at the leaf (lowest) level may also be referred to as a "base time period".

The summary data structure may take the form of a *P*-dimensional histogram (with *P* a positive integer). In other words, a *P*-dimensional array parameterised by the signal properties and storing the respective counts. Since a large number of the entries of such a *P*-dimensional array may be zero, for efficiency and to save memory space the data structure is preferably formatted as a list of "coordinates" in the form of a unique combination of the quantised signal property values, each such coordinate having a corresponding count of greater than or equal to one. More preferably, when executed using a digital electronic processor, the summary data structure may be stored in memory as a hashmap.

Receiving the time series of radio data may take the form of obtaining the time series of data. For example, the time series of ratio data may be obtained from one or more radios.

The quantisation of signal property values for the purposes of the summary data structure may alternatively be described as binning. The quantisation (or binning) need not be the same at each level of the summary database. For example, the quantisation (or binning) may become coarser (larger bins) as the level of the summary database increases.

The time series of radio data may be received and stored in real time. The detection of signals and storage of detected signals to the detailed database and summary database may occur at the end of each buffer period without interrupting the reception and storage of the time series of radio data.

This may be enabled because detailed databases and summary databases as described herein are built up sequentially based on the most recently received data, and require no, or only minimal, changes to previously generated nodes of the respective databases. In this way, indexing of the received time series of radio data can keep up with the reception of data, allowing near immediate browsing and analysis once collection is completed. Additionally, in some examples, the already generated sections of the detailed database and the summary database may be used to implement browsing, querying and analysis of data during the reception of the time series of radio data, and without interruption. In this way an operator monitoring a radio spectrum in a region/area may obtain real-time insights into what is occurring, without interrupting recording of the time series and potentially missing signal detections.

The signal properties may include one of more of a minimum frequency, a maximum frequency, a signal bandwidth and/or a centre frequency. The minimum frequency may also be referred to as the "start" frequency. The maximum frequency may also be referred to as the "end" frequency. The signal properties may further include an integrated signal power. The signal properties may further include any parameter or parameters which may be calculated based on the radio data corresponding to a signal.

Each detailed node may store up to a threshold number of signals. The threshold number of signals stored by each detailed node may be predetermined. The threshold number of signals stored by each detailed node may be determined by a user. The threshold number of signals for each detailed node may depend on the corresponding level of that detailed node.

Each level of the detailed database may include one active detailed node having a node start time, and any number of closed detailed nodes, each having a node start time and a node end time defining the corresponding detailed node period. Storing a signal to the detailed database may include, starting from the lowest level of the detailed database, searching successively increasing levels of the detailed database until an active detailed node at the searched level has a node start time before the start time of that signal, and in response storing that signal to the active detailed node at the searched level. Storing a signal to the detailed database may also include, in response to the active detailed node at the searched level is now storing a number of signals equal to the corresponding threshold number of signals: closing the active detailed node at the searched level, assigning the end time of that signal as the node end time; and opening a new active detailed node at the searched level, assigning the end time of that signal as the node start time.

If the search reaches the current maximum level, then the method may further include increasing the maximum level by one and opening a first detailed node for the new maximum level as an active node. The first detailed node at each level may have the same start time, corresponding to the beginning of the time series of radio data.

Alternatively, the detailed database may take the form of an *N*-ary tree structure. The number of signals stored to each detailed node may be unlimited, and storing a signal to the detailed database may take the form of, starting from the lowest level of the detailed database, searching successively increasing levels of the detailed database until the lowest level available detailed node period encompassing the respective start and end of that signal is found, and storing the signal to the corresponding detailed node. The detailed database in the form of an N-ary tree structure may be built in real-time using the methods described in relation to Figures 2 to 4 of WO 2021/171018 A1.

Storing a signal to the detailed database may also include storing the corresponding time series of radio data to the same detailed node as the signal properties. The corresponding time series of radio data may include, or take the form of, IQ data. The corresponding time series of radio data may include, or take the form of, pairs of frequencies and corresponding power values. Alternatively, the signal properties may include a pointer to the time series of radio data corresponding to that signal.

The summary database may include, at the lowest level, up to a number *N_{b}* of active leaf summary nodes corresponding to a summary buffer period, and any number of closed leaf summary nodes corresponding to earlier summary node periods. Storing a signal to the summary database may include:
a. in response to the start and end time of that signal are wholly within the summary buffer period, updating, based on the signal property values of that signal, the summary data structures of every active leaf summary node having a summary node period overlapping the duration of that signal;
b. in response to the end time of that signal is within the summary buffer period and the start time of that signal is before the summary buffer period, storing the signal properties corresponding to the signal into the auxiliary database;
c. in response to the end time of that signal is after the summary buffer period:
   closing the oldest active leaf summary node and propagating the corresponding summary data structure to all higher level summary nodes from which the oldest active leaf summary node is a descendant, wherein each summary node only counts that signal once in the respective summary data structure;
   opening a new active leaf summary node as the most recent active leaf summary node in the summary buffer period;
d. Steps a. to c. may be iterated until either:
   the signal property values of the signal are added to every active leaf summary node having a summary node period overlapping the duration of that signal; or
   the signal properties corresponding to that signal are stored into the auxiliary database.

The condition that each summary node only counts each signal once in the respective summary data structure may be enforced using carry-over data stored by each summary node. The carry-over data may include, or take the form of, for each unique combination of quantised signal property values, a carry-over count of the number of signals which have that unique combination of quantised signal property values and which correspond to the respective time period and the preceding time period. When data of a summary node is propagated to the next level up, the carry-over data may be included. Alternatively, any other suitable method for propagating the summary data structures to higher levels whilst avoiding double counting may be used.

Each level of the summary database may include one active summary node having a node start time, and any number of closed detailed nodes. The active summary node may be the most recent. Each summary node may have a node start time and a node end time defining the corresponding summary node period. The auxiliary database may include, or take the form of, an interval structure corresponding to each level of the summary database. Storing a signal to the summary database may include, starting from the lowest level, searching successively increasing levels of the summary database, and at each level:
e. in response to the start and end time of that signal are within the summary node period corresponding to the active summary node at the searched level, adding the signal property values of that signal to the summary data structure of the active summary node at the searched level;
f. in response to the start time of that signal is within the summary node period corresponding to the active summary node at the searched level and the end time is outside the summary node period:
   closing the active summary node at the searched level and propagating the corresponding summary data structure to all higher level summary nodes from which the active summary node at the searched level is a descendant;
   opening a new active summary node at the searched level and returning to step e.;
g. in response to the end time of the signal is within the summary node period corresponding to the active summary node at the searched level and the start time is outside the summary node period:
   adding the signal data to the interval structure corresponding to the searched level; and
   increasing the searched level by one.

Each level of the summary database may include one active summary node having a node start time, and any number of closed detailed nodes. The active summary node may be the most recent. Each summary node may have a node start time and a node end time defining the corresponding summary node period. The auxiliary database may include, or take the form of, an interval structure corresponding to each level of the summary database. Storing a signal to the summary database may include:
h. in response to the start and end time of that signal are within the summary node period corresponding to the active leaf summary node, adding the signal property values of the signal to the summary data structure of the active leaf summary node;
i. in response to the start time of that signal is within the summary node period corresponding to the active summary node at the searched level and the end time is outside the summary node period:
   closing the active recent leaf summary node and propagating the corresponding summary data structure to all higher level summary nodes from which the active leaf summary node is a descendant;
   opening a new active leaf summary node and returning to step h.;
j. in response to the end time of the signal is within the summary node period corresponding to the active summary node at the searched level and the start time is outside the summary node period:
   adding the signal data to the interval structure corresponding to the leaf level; and
   adding the signal data to a propagation list stored in the active leaf summary node.

Propagating the corresponding summary data structure to all higher level summary nodes from which the active leaf summary node is a descendant may include, at each level, in response to receiving a propagation list from the descendant level, for each signal stored in the propagation list: if the start and end time of that signal are within the summary node period of the active summary node at that level, adding the signal property values of that signal to the corresponding summary data structure; or otherwise, adding that signal to the propagation list of the active summary node at that level and to the interval corresponding to that level.

Each summary node and each detailed node may be read-only once the current time is after the corresponding respective node period. Read-only status need not be explicitly set, instead, this may correspond to the closed nodes simply not requiring access or modification unless queried.

The method may also include receiving a query including query fields. The query fields may include a query start time, a query end time and one or more ranges of signal properties. In response to meeting a condition based on the query fields, the query may be processed using the summary nodes of the summary database. Otherwise, if the condition is not met, the query may be processed using the detailed nodes of the detailed database.

The difference between the query start time and the query end time may be a query time period. The condition may include, or take the form of, whether the query time period exceeds a query period threshold. The query period threshold may be predetermined. The query period threshold may be dynamically determined, for example, based on the processing power of hardware executing the method. The query period threshold may be user specified.

The condition may include, or take the form of, whether an approximation of the number of signals within the query exceeds a certain threshold. This threshold may be dynamically determined, for example, based on the processing power of hardware executing the method. The threshold may alternatively be user specified.

According to a second aspect of the invention, there is provided a method of querying a detailed database and summary database generated using the method of the first aspect. The method includes receiving a query comprising query fields. The query fields including at least a query start time, a query end time and one or more ranges of signal properties. The difference between the query start time and the query end time is a query time period. The method includes, in response to meeting a condition based on the query fields, processing the query using the summary database, otherwise, processing the query using the detailed database.

The number of ranges of signal properties need not be equal to the number of signal properties. In other words, the query may be based on only a subset of the signal properties.

The condition may include, or take the form of, whether the query time period exceeds a query period threshold. The query period threshold may be predetermined. The query period threshold may be dynamically determined, for example, based on the processing power of hardware executing the method. The query period threshold may be user specified.

The condition may include, or take the form of, whether an approximation of the number of signals within the query exceeds a certain threshold. This threshold may be dynamically determined, for example, based on the processing power of hardware executing the method. The threshold may alternatively be user specified.

Processing the query using the detailed database may include starting from the lowest level of the detailed database, searching successively increasing levels of the detailed database and adding to a detailed query result each signal which matches all the query fields, and outputting the detailed query result.

A signal may match all of the query fields if it has a start time after the query start time, has an end time before the query end time, and has signal properties within all of the received one or more ranges of signal properties.

The detailed query result may include, or take the form of, a list of the start time, end time and signal properties of each signal found in the detailed database matching the query fields.

The method may include aggregating one or more signal properties stored in the detailed query result. The signal properties to be aggregated may be predetermined. The signal properties to be aggregated may be selected by a user when preparing the query. Signal properties may be aggregated to generate, based on the signal properties stored in the query result, one or more of histograms, bar charts scatter plots, surface plots and so forth. Aggregating may include using the detailed query result to populate an aggregated data structure which stores, for each unique combination of a subset of the quantised signal property values, a count of the number of signals in the detailed query result which have that unique combination of the subset of the quantised signal property values.

The aggregation of one or more signal properties may be updated every time a new signal matching the query fields is found in the detailed database and added to the detailed query result. Alternatively, the aggregation of one or more signal properties may be updated in response to the number of results added to the detailed query result since last updating the aggregation of one or more signal properties is equal to a threshold value. The detailed query result may be reset after updating the aggregation of one or more signal properties of the one or more query result structures. In other words, the aggregation of one or more signal properties may be updated once a threshold number of new results have been added to the list, and the list may then be restarted.

Processing the query using the summary database may include determining, based on the query time period, a query processing level of the summary database. Processing the query using the summary database may include, for each summary node at the query processing level having a summary node period overlapping the query time period, adding any entry in the corresponding summary data structure which matches the query fields to a summary query result. Processing the query using the summary database may include searching the auxiliary database and adding any signal matching the query fields to the summary query result. Processing the query using the summary database may include outputting the summary query result.

The query processing level may be a level of the summary database for which the time period corresponding to the summary nodes has the minimum difference to a predetermined or dynamically determined fraction of the query time period. For example, the predetermined fraction may be 1/50 and 1/1000, so that the query processing level may correspond to a level at which the time period corresponding to the summary nodes is closest to equalling the predetermined fraction of the query time period.

The summary query result may take the form of a list. When an entry in the summary data structure matching the query fields is found, a new entry may be added to the list including the unique combination of quantised signal property values corresponding to that entry and corresponding summary node start and end times. When signals are added from the auxiliary database, a new entry may be added to the list including the signal values corresponding to that signal, and corresponding signal start and end times, and the count value may be assigned as 1 (one).

The method may include aggregating one or more signal properties stored in the summary query result in the same way as aggregating signal as for signal properties stored in the detailed query result. Aggregating one or more signal properties stored in the summary query result may be additionally weighted based on the count number corresponding to each entry.

According to a third aspect of the invention, there is provided apparatus configured to carry out the method according to the first and/or second aspects.

According to a fourth aspect of the invention, there is provided apparatus configured to receive a time series of radio data. The apparatus is also configured, for each of a plurality of buffer periods, at the end of a most recently elapsed buffer period, to analyse the radio data of that buffer period to detect signals. The apparatus is also configured, in response to detecting one or more signals ending within that buffer period to determine a start time and an end time of that signal, and one or more signal properties corresponding to that signal, the signal properties including at least a duration, and to store that signal to a detailed database and a summary database. The detailed database includes a plurality of levels. Each level includes one or more detailed nodes. The detailed nodes within each level sub-divide time into consecutive detailed node periods. Storing a signal to the detailed database includes storing the signal properties corresponding to that signal into the lowest level available detailed node corresponding to a detailed node period encompassing the start time and end time of that signal. The summary database includes an auxiliary database and a tree-structure of summary nodes having a plurality of levels. The summary nodes at each level correspond to consecutive summary node periods of equal length. Each summary node stores a summary data structure which stores, for each unique combination of quantised signal property values, a count of the number of signals corresponding to the respective summary node period which have that unique combination of quantised signal property values. Storing a signal to the summary database includes, at each level of the summary database, updating, based on the signal properties, the summary data structures of one or more summary nodes having summary node periods overlapping the duration of that signal, or storing the signal properties corresponding to that signal in the auxiliary database.

The apparatus may also include one or more radios configured to receive the time series of radio data.

### Brief Description of the Drawings

Certain embodiments of the present invention will now be described, by way of example, with reference to the accompanying drawings in which:
Figure 1 illustrates a system for processing one or more time series of radio frequency data received from, or obtained using, one or more radio receivers;
Figure 2 shows a process flow diagram for a method of analysing and indexing a time series of radio data;
Figure 3A shows a 2D histogram (or "heat map") of power against frequency and time;
Figure 3B is the same as Figure 3A, with power replaced by numbers if signal detections;
Figure 4 schematically illustrates an example of signal detections spread across a number of buffer time periods of the method shown in Figure 2;
Figure 5 shows a process flow diagram for a method of querying a detailed database and a summary database generated using the method shown in Figure 2;
Figure 6A schematically illustrates start and end times for a set of signals; Figure 6B schematically illustrates the contents of a detailed database formed by applying the method of Figure 7 to the signals shown in Figure 6A, and Figure 6C schematically illustrates the structure of a node of the detailed database shown in Figure 6B;
Figure 7 shows a process flow diagram for a method of forming the detailed database;
Figure 8 shows a process flow diagram for a method of processing a query using a detailed database produced using the method of Figure 7;
Figure 9 schematically illustrates the structure of a tree structure of a summary database;
Figure 10 schematically illustrates the structure of a node of the tree structure shown in Figure 9;
Figure 11 shows a process flow diagram for a first exemplary method of building a summary database;
Figure 12 shows a process flow diagram for a method of propagating data to higher levels within a tree structure as part of the method of Figure 11;
Figure 13A is the same as Figure 6A, Figure 13B schematically illustrates a tree structure of a summary database generated using the first exemplary method shown in

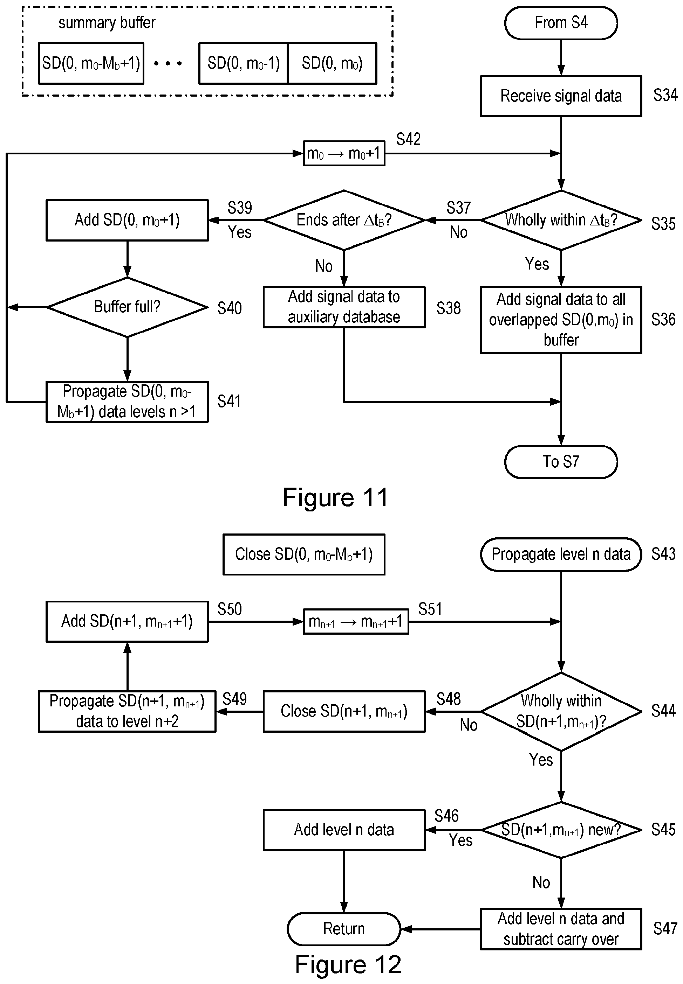

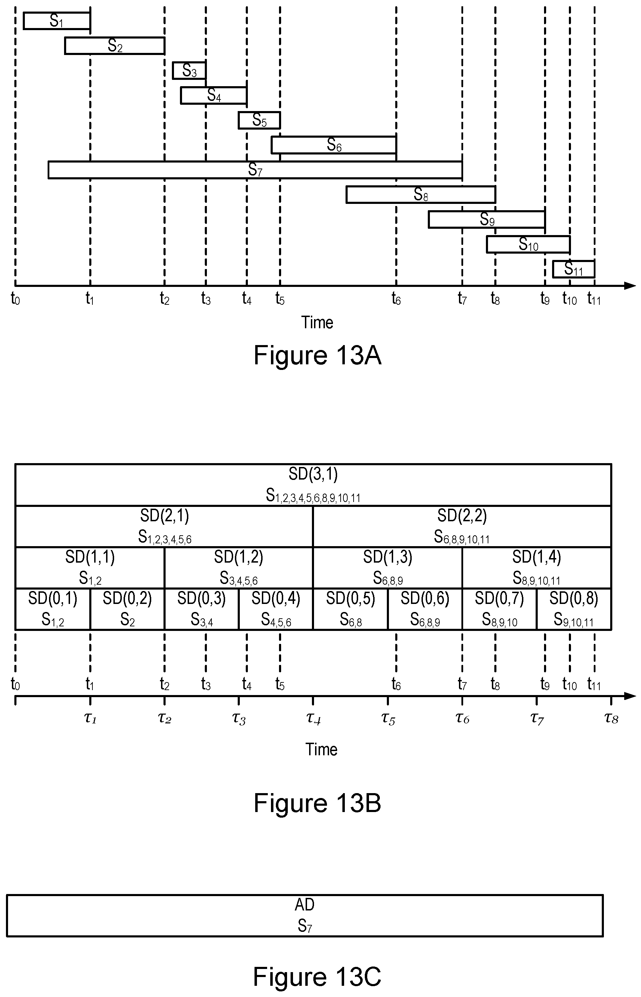

Figure 11, and Figure 13C schematically illustrates an auxiliary database of the summary database generated using the first exemplary method shown in Figure 11;

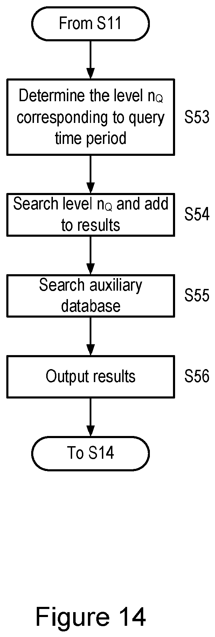

Figure 14 shows a process flow diagram for a method of processing a query using a summary database produced using the method of Figure 11;

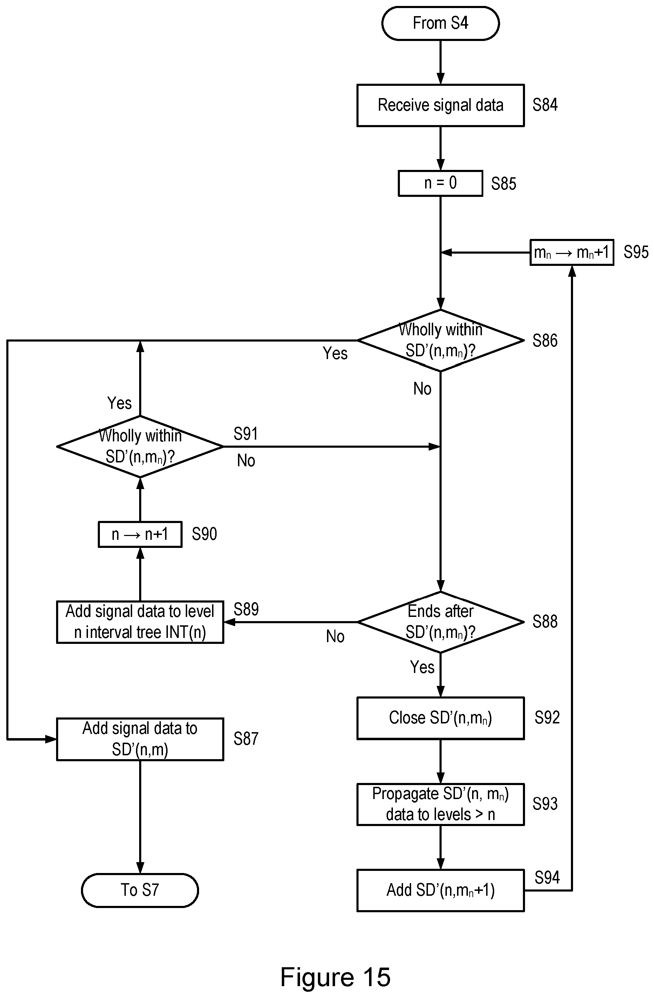

Figure 15 shows a process flow diagram for a second exemplary method of building a summary database;

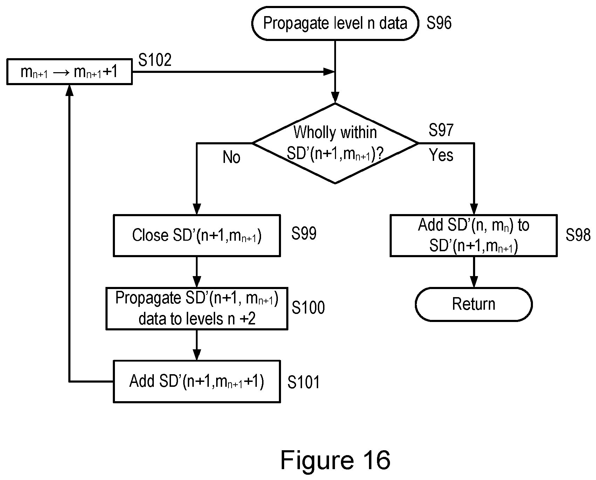

Figure 16 shows a process flow diagram for a method of propagating data to higher levels within a tree structure as part of the method of Figure 15;

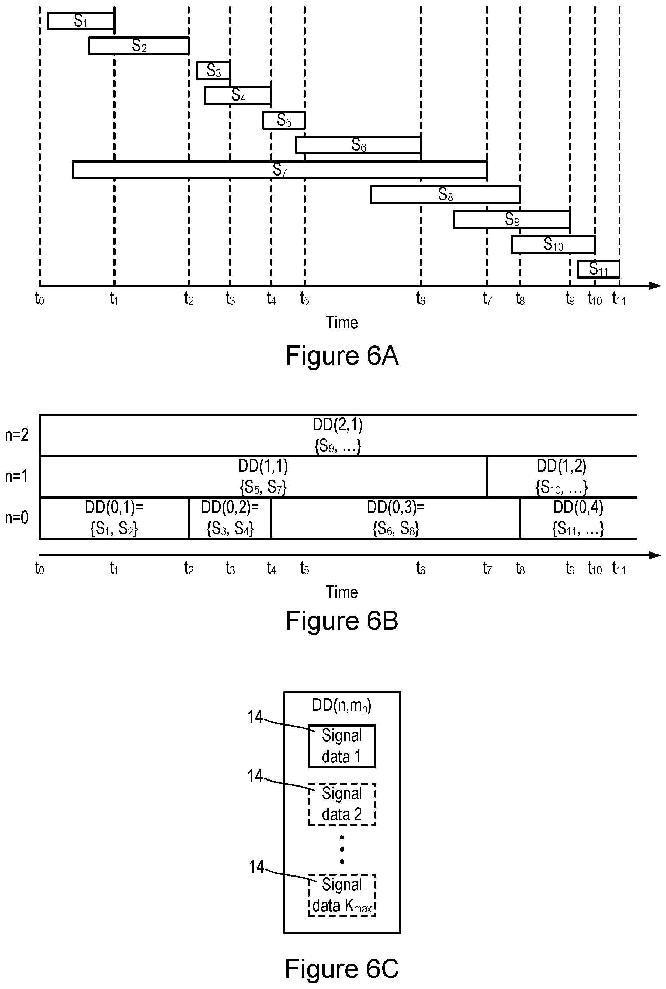

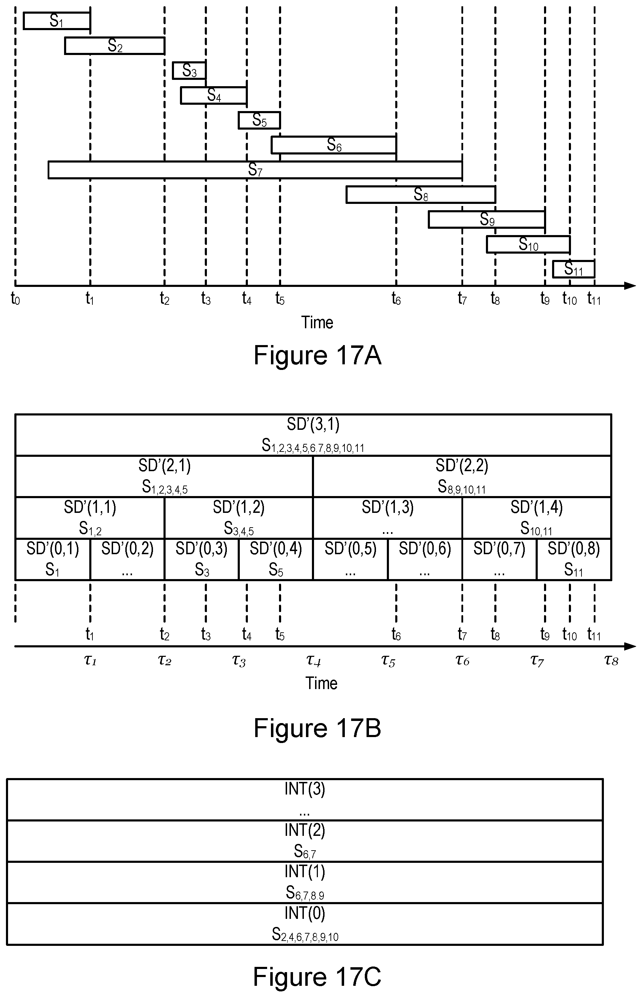

Figure 17A is the same as Figures 6A and 13A, Figure 17B schematically illustrates a tree structure of a summary database generated using the second exemplary method shown in Figure 15, and Figure 17C schematically illustrates an auxiliary database of the summary database generated using the second exemplary method shown in Figure 15;

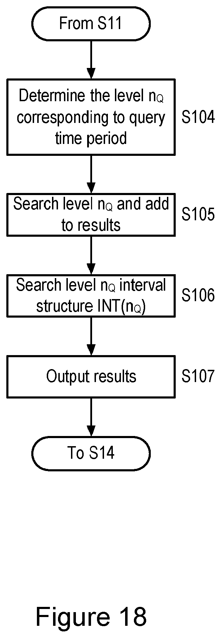

Figure 18 shows a process flow diagram for a method of processing a query using a summary database produced using the method of Figure 15;

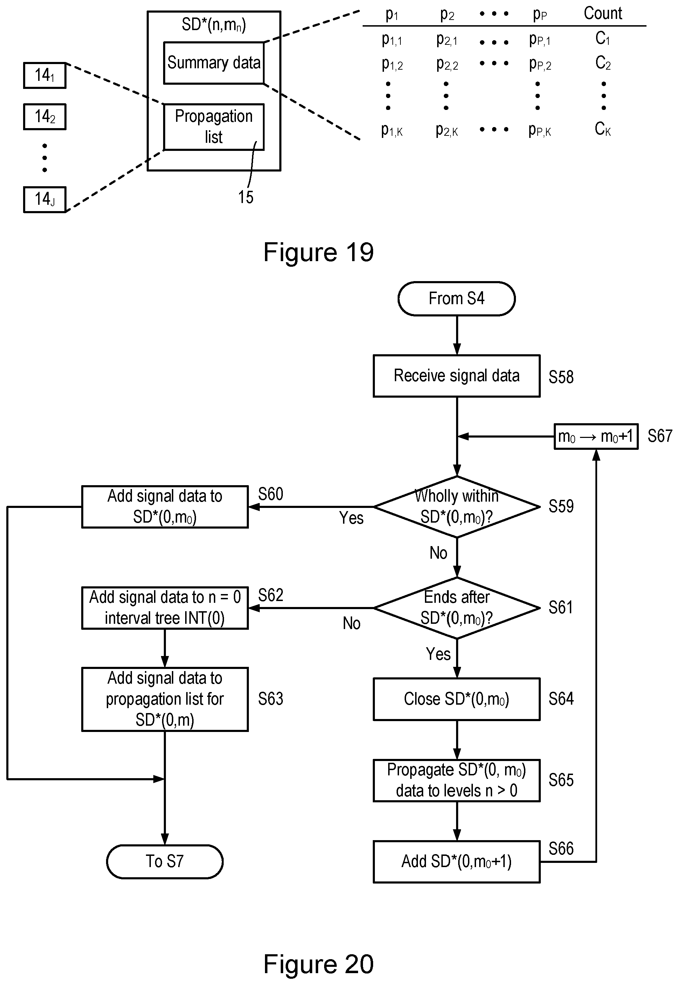

Figure 19 schematically illustrates the structure of a node of a tree structure of a summary database produced using the method of Figure 20;
Figure 20 shows a process flow diagram for a third exemplary method of building a summary database; and

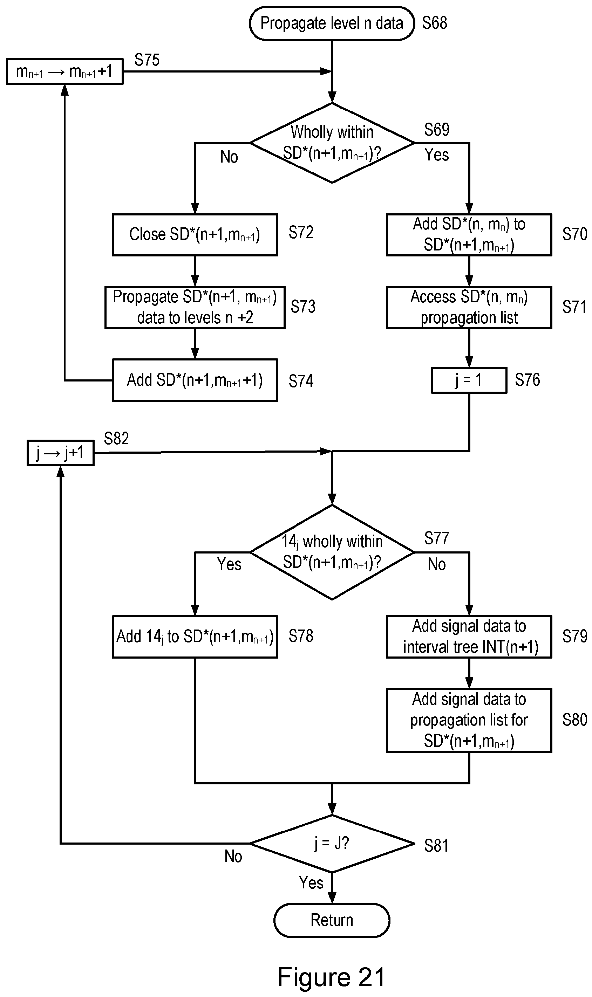

Figure 21 shows a process flow diagram for a method of propagating data to higher levels within a tree structure as part of the method of Figure 20.

### Detailed Description of Certain Embodiments

In the following description, like parts are denoted by like reference numerals.

Processing a large dataset to produce indices and summary data can be time consuming. When an extended time series of data had finished collecting/recording, a user must wait for a large volume of data, typically terabytes, petabytes or even more, to be processed and indexed before they can begin analysing the data. Such processing may extend for hours or even days, depending on the volume of data. In many applications, in particular diagnostic or detection applications, it would be advantageous to be able to analyse recorded data as soon as possible, or to be able to conduct real time analysis during the data collection.

WO 2021/171018 A1 describes methods enabling indexing, aggregation and even browsing of time series of data, including radio IQ data, in real-time without interrupting reception and storage of the time series of data. The aggregation of the received data described in WO 2021/171018 A1 allows for browsing of the dataset almost immediately after finishing reception, or even during reception of the time series of data. In particular, the data may be visualised at different timescales using the pre-aggregated data. For raw data, for example radio IQ data, there are reasonably predictable ways to aggregate data, for example, total power corresponding to a given combination of a frequency range *δF* and time interval *δt.*

However, to move beyond visualisation and browsing of raw data and enable comparable functionality for derived measurements, the number of possible permutations of search parameters expands very rapidly, so that it becomes impractical to pre-generate aggregations in the manner outlined in WO 2021/171018 A1. Firstly, because generating a large number of permutations of pre-aggregated views will make it challenging or impossible to keep up with real-time acquisition and storage of a time series. Secondly, because generating a large number of permutations of pre-aggregated views will require large amounts of additional storage for views which a user may, or may not, ever wish to view.

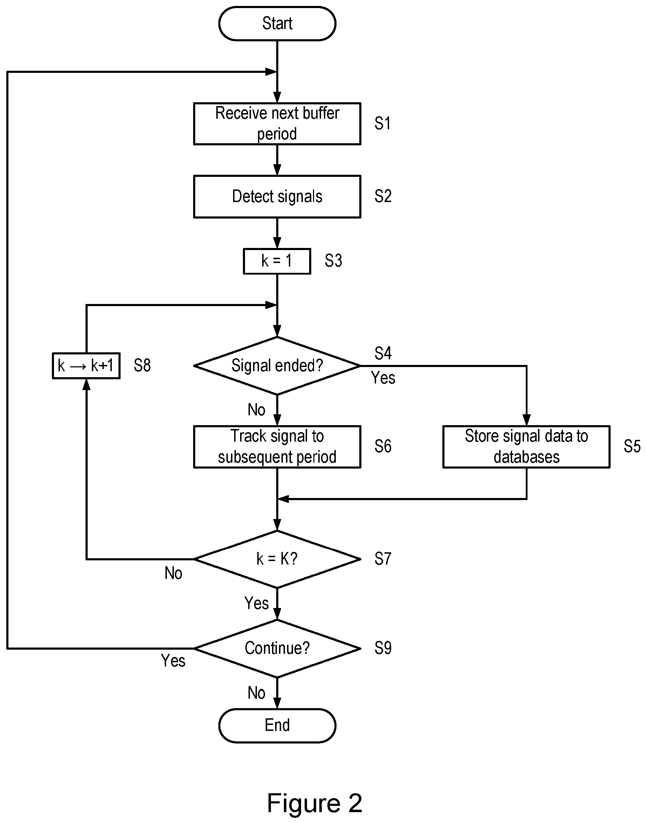

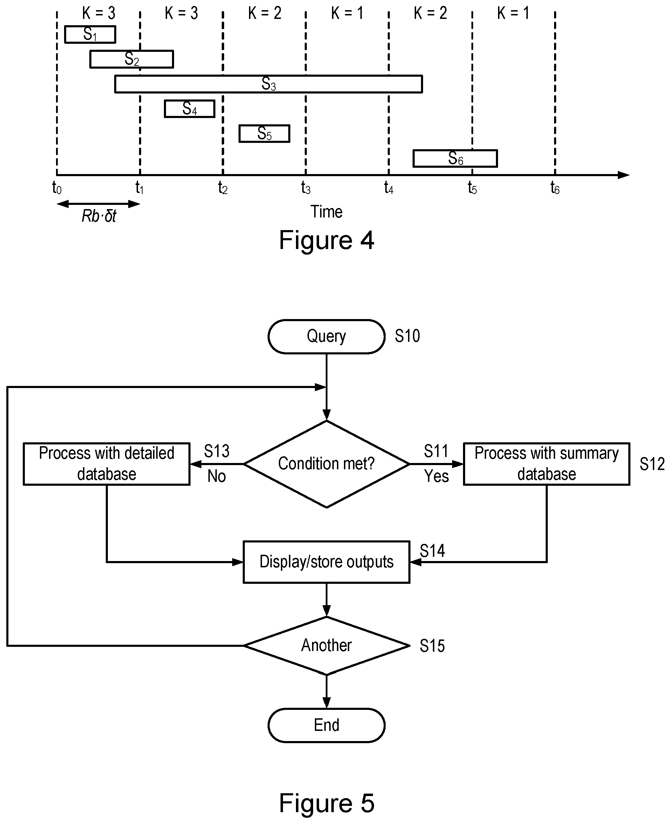

This specification concerns methods and hardware for analysis of time series of radio data. Any hardware and/or methods suitable to provide real-time acquisition and storage of a time series of radio data may be used in combination with the methods of analysis described herein. Real-time indexing of the time series of radio data is preferable, but not essential. For example, indexing, aggregation and even browsing of the time series of radio data may be implemented as described in WO 2021/171018 A1, the entire contents of which are hereby incorporated by reference. In particular, the system shown in Figure 5 of WO 2021/171018 A1 may be used to implement the methods described in relation to Figures 2 to 4 of WO 2021/171018 A1.

The present specification concerns analysing the time series of radio data as it is obtained to identify any likely signals. Once a signal is identified, one or more predetermined or user specified signal properties of that signal are determined, and the signal and corresponding signal properties are stored to a dual-database structure described hereinafter. As will be explained, the dual-database structure includes a detailed database storing full information of each signal, and a summary database which may be used to rapidly and dynamically generate aggregations for visualising the signal properties in response to a user query. The methods of the present specification enable a user to begin analysing the derived data for automatically identified signals almost immediately after acquisition, or even during acquisition without interrupting reception and storage of the time series of radio data.

Although there are conventional methods for inserting new nodes into database structures, conventional methods typically require updating previously generated nodes. This can be time consuming, especially as the tree grows larger, and may be further complicated if each node should also point to corresponding summary data (which may require re-calculation if the node is updated). As already mentioned, pre-generated of summary/aggregated data is impractical for all possible permutations of more than a couple of a signal properties.

In contrast, the methods of the present specification are optimised for live, or real time, indexing, and also includes generating a summary database which enables user queries covering large numbers of signals to be processed without the need to revert to every individual signal record. Further distinctive details of the new method of indexing and analysing a time series of radio data in real-time shall become apparent from the descriptions hereinafter.

Where this specification refers to a binary tree structure, the following terminology may be used herein. A binary tree herein is formed from a number of binary tree nodes, each of which may have between zero and two edges which connect to binary tree nodes at a lower level of the tree structure. The number of edges leaving a binary tree node may be referred to as the degree of that binary tree node. A binary tree node having a degree of zero may be referred to as a leaf (plural leaves, sometimes also referred to as "end" nodes). The highest level binary tree node in a binary tree may be referred to as a binary tree root node. The intermediate binary tree nodes connecting between a binary tree root node and the binary tree leaves descending from that binary tree root node may simply be referred to as binary tree nodes (or alternatively as binary tree "branch" nodes). Binary tree nodes and binary tree root nodes may sometimes also be referred to as "internal" nodes, in contrast to binary tree leaves. Trinary tree structures are similar and use similar terminology, and differ from binary trees in that each node may have between zero and three edges. Similarly for Quaternary, and so forth to the general case of an *N*-ary tree structure (having between zero and a number, *N*, of edges).

The lower level nodes connected by edges to a node may be referred to as the children of that node, which itself may be referred to as the parent of the connected lower level nodes. The depth of a node or leaf may refer to the number of edges which must be traversed moving from the root node to that node or leaf. The height of a node may refer to the number of edges which must be traversed moving from the deepest leaf to that node. The height may refer to the height of the root node of a tree structure. A level of a tree structure may refer to all the nodes or leaves having the same depth or same height. All nodes and leaves which may be reached from a particular node may be referred to as descendants of that node, and that node itself may be referred to as an ancestor of the descendant nodes and/or leaves.

Structures other than tree-structures are also referred to herein, and may be described having levels/heights and nodes/leaves by analogy to tree-structures. In particular, the detailed database described hereinafter with reference to Figures 6A to 7.

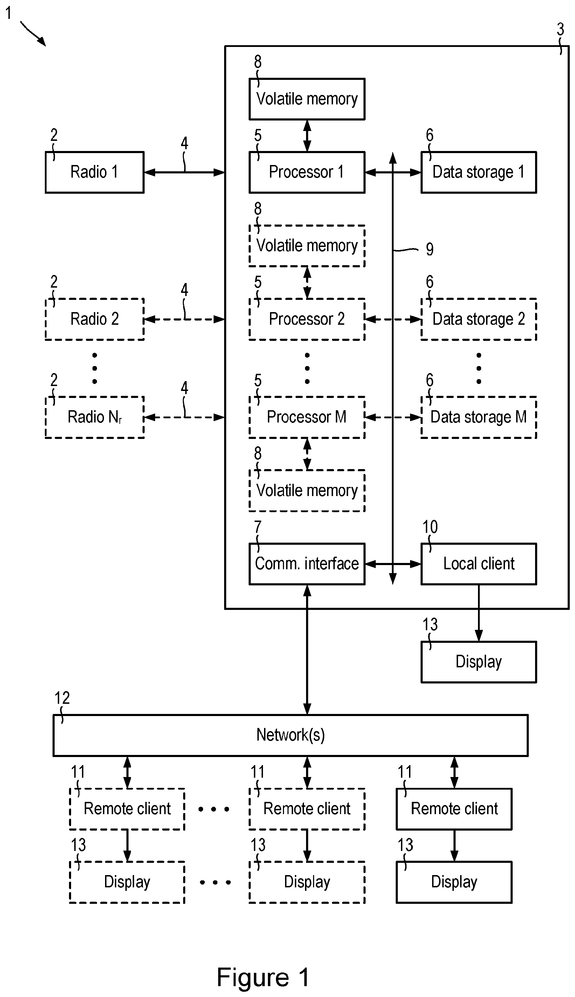

Referring to Figure 1, a system 1 is shown.

The system 1 includes one or more data sources in the form of radio receivers 2 in communication with an apparatus 3 via corresponding links 4. The apparatus 3 includes one or more processors 5, one or more storage devices 6 and optionally a communications interface 7. Each processor 5 has associated volatile memory 8 accessible by that processor 5. Each processor 5 preferably has a corresponding data storage device 6, although this is not necessary depending on the bit rate of processed data output by the processor 5. In other examples, more than one storage device 6 may correspond to a single processor (for example a Redundant Array of Independent Disks, or RAID, configuration). The number, *M*, of processors 5 is preferably equal to the number, *Nᵣ,* of radio receivers 2, so that each processor 5 may be dedicated to processing a time series of data from a particular radio receiver 2. However, depending on the computational capacity of each processor 5 and the bit-rate from each radio receiver 2, a processor 5 may process data from two or more radio receivers 2 in some examples for which *Nᵣ > M.*

When the apparatus 3 includes two or more processors 5, they may be integrated in a single data processing device or chip, for example sharing a common bus 9 (as illustrated in Figure 1) and/or volatile memory 8. Alternatively, when the apparatus 3 includes two or more processors 5, each processor 5 may be provided as a separate data processing device, optionally including one or more dedicated data storage devices 6 and volatile memory 8, and the multiple data processing devices may be stacked (or racked) or otherwise interconnected to provide the apparatus 3.

The system 1 includes a client which may take the form of a local client 10 integrated with or connected to the apparatus 3, and/or one or more remote clients 11 connected to the apparatus 3 via the communications interface 7 and one or more wired or wireless networks 12. The one or more wired or wireless networks 12 may include the internet. Each local or remote client 10, 11 is connected to a display 13, or some other suitable output device, in order to present information received from the apparatus 3 to a user. Each local or remote client 10, 11 may be configured to receive and/or generate user queries and to transmit the user queries to the apparatus 3. A user query may be manually input by a user, for example by providing input to a graphical user interface (GUI) or using an electronic form. Alternatively, a user query may be automatically generated and submitted by an analysis program (not shown), or a graphical user interface used for data browsing being executed by the local or remote client 10, 11. For example, an analysis program (not shown) may utilise an application program interface (API) for data queries to formulate and submit user queries to the apparatus 3. An analysis program (not shown) may include one or more machine learning models, for example, trained on human indexed training sets to identify particular signals or types of signals for follow-up, for example for review by a human user. In some applications, for example detecting unmanned aerial vehicles, UAVs, or "drones" approaching or encroaching on an airport perimeter, the analysis program may trigger automated follow-up using one or more cameras directed based on the radio data.

Herein, the term "user query" may be used to encompass manually entered user queries and also user queries which are automatically generated, for example by an analysis program (not shown) being executed by the local or remote client 10, 11.

Each processor 5 may be a single core processor or a multi-core processor. When two or more processors 5 are used, each processor 5 preferably does not correspond to different cores of a single processor unit/chip. Each processor 5 may take the form of one or more digital, electronic programmable central processing units (CPUs) capable of executing code read from a non-transitory medium or a memory (for example data storage device 6 and/or volatile memory 8) to perform the functions and operations taught herein. Alternatively, each processor 5 and the corresponding volatile memory 8 may be provided by a corresponding microcontroller. In other examples, the methods described hereinafter may be performed using processors 5 and volatile memories 8 implemented using any suitable digital signal processing circuit, such as a system-on-a-chip, application specific integrated circuit (ASIC) or field-programmable gate array (FPGA).

Each data storage device 6 may take the form of one of more non-transitory computer readable media such as, for example, hard disc drives (HDD) and/or solid state drives (SSD). Each data storage device 6 may take the form of a number of HDDs configured as a Redundant Array of Independent Discs (RAID), or a number of SSDs arranged in a RAID configuration.

The links 4 connecting the radio receivers 2 to the apparatus 3 may take the form of physical connections such as, for example, Ethernet connections, optical fibre links, coaxial cables and so forth. Alternatively, some or all of the links 4 may take the form of wireless links. The links 4 may include one or more networks such as, for example, mobile phone networks, the internet, local area networks, and so forth. The links 4 should be sufficient to transfer the data bit-rate output by the radio receivers 2. In applications where provision of reliable and/or sufficiently high bandwidth links 4 is not possible, processing may be devolved to data nodes (not shown) integrating a radio receiver 2 with the processing 5, memory 8 and storage 6 necessary to perform some or all of the steps of the data processing methods described herein. Data may be periodically downloaded from data nodes (not shown) by visiting each data node (not shown) and establishing a direct connection or short range wireless connection to a communication interface of that data node (not shown).

A time series of data received from each radio receiver 2 of the respective link 4 may take the form of In-phase and Quadrature (IQ) data, spectrograms generated by applying overlapped Fast Fourier Transforms (FFTs) to the IQ data, power spectrum data, or any other data suitable for representing radio signals or spectra. The apparatus 3 may control the tuning frequency of each radio receiver 2 For example, user input via a GUI executed by a local or remote client 10, 11 may specify a range of frequencies for the radio receivers 2. In some implementations a lower, start frequency *f₁* and an upper, end frequency *f₂* may be pre-set (for example loaded from a configuration file), or dynamically user defined using the GUI executed by a local or remote client 10, 11.

The apparatus 3 may control the one or more radio receivers 2 to perform a frequency swept measurement spanning the range between the start and end frequencies *f₁, f₂.* A frequency sweep may be used when a radio receiver 2 has an instantaneous bandwidth *Δƒ_{IBW},* which is less than the range *f₂*-*f₁* between start and end frequencies *f₁, f₂.* However, when the start and end frequencies *f₁, f₂* have a range smaller than the instantaneous bandwidth *Δf_{IBW},* a frequency sweep may not be necessary.

When two or more radio receivers 2 are connected to the apparatus 3, a frequency sweep may be performed faster by staggering the central frequencies f_{c} to which each radio receiver 2 is tuned. Alternatively, when two or more radio receivers 2 are connected to the apparatus 3, they may be tuned to have adjacent or overlapping instantaneous bandwidths *Δf_{IBW},* increasing an effective instantaneous bandwidth for which a time series of radio data may be recorded. When two or more radio receivers 2 are tuned to have adjacent or overlapping instantaneous bandwidths *Δf_{IBW}* in order to provide an increased effective instantaneous bandwidth, the corresponding time series of radio data may be combined (e.g. concatenated in frequency) and processed as a single time series of data (for example, at each time the data may include pairs of frequencies and corresponding signal power and/or phase).

In a further alternative, each of two or more radio receivers 2 may be individually tunable to a different central wavelength *f_{c}* in order to make independent measurements. When two or more radio receivers 2 are separately tuned for independent measurements, the data from each radio receiver 2 may be processed as a separate time series of data.

### Method of analysing and indexing a time series of radio data

Referring also to Figure 2, a process flow diagram is shown for a method of analysing and indexing a time series of radio data.

The method of Figure 2, and all subsequently described methods herein, are computer implemented. For example, using the apparatus 3 shown in Figure 1. Alternatively, methods described herein may be executed by any suitable data processing apparatus including one or more digital electronic processors communicatively coupled to random-access memory and computer readable storage, said data processing apparatus including or being communicatively coupled to one or more radio receivers in order to receive a time series of radio data.

The method illustrated in Figure 2 does not relate to the reception, storage and optionally indexing of the radio data as received, for example the IQ data, power data and so forth. This may be carried out using any suitable method, including but not limited to the methods described in WO 2021/171018 A1, the entire contents of which are hereby incorporated by reference. For example, the system shown in Figure 5 of WO 2021/171018 A1 may be used to implement the methods described in relation to Figures 2 to 4 of WO 2021/171018 A1.

Instead, the method illustrated in Figure 2 concerns analysing the time series of radio data to detect signals, determining one or more signal properties of detected signals, and storing and indexing the signals and signal properties ready for swift browsing and/or querying.

A buffer of the time series of radio data is received (alternatively "filled") (step **S1**). Let *E*(*t*) denote the radio data of the time series sampled at time *t.* The sample *E*(*t*) may take the form of IQ data (2D vector) from one or more radio receivers 2. Alternatively, the sample *E*(*t*) may take the form of a list comprising frequencies *f* spanning between the start *f₁* and end *f₂* frequencies, each frequency having corresponding values of power and phase. The method explained hereinafter may be readily adapted to any specific format or content of the samples *E(t).* Samples *E(t)* are typically obtained at regular sampling intervals *δt,* relative to a start time *tₒ* (for example the beginning of recording the time series of radio data), let *E*(*tₒ + r.δt*) *= Eᵣ* for positive, integer *r.* The received buffer may have a size *Rb* so that the buffer received (step **S1**) may be denoted as *BuffR =* {*E*_{*r-Rb+*1}, *E_{r-Rb+2}, ..., Eᵣ₋₁, Eᵣ*}. A second buffer of the same length *Rb* may be filled with the time series of radio data whilst the received buffer period *BuffR* is processed. Depending on the processing speed available, the data rate and similar considerations, two, three or even more buffers may be maintained.

Following the end of each consecutive buffer period *Rb·δt,* the radio data *BuffR =* {*E*_{*r*-}*_{Rb+1}, E_{r-Rb+2}, ..., Eᵣ₋₁, Eᵣ*} stored for the most recently elapsed buffer period *Rb·δt* is analysed to detect any signal which may be present (step **S2**). Any suitable method for automated signal detection in radio data may be used, for example including, but not limited to:
- Thresholding based on signal power (in time and/or frequency space);
- Correlation analysis to compare the radio data against one or more known signal types;
- Clustering analysis;
- Expert systems; and/or
- Application of a machine learning algorithm trained using signals indexed by a human or any of the previously mentioned methods.

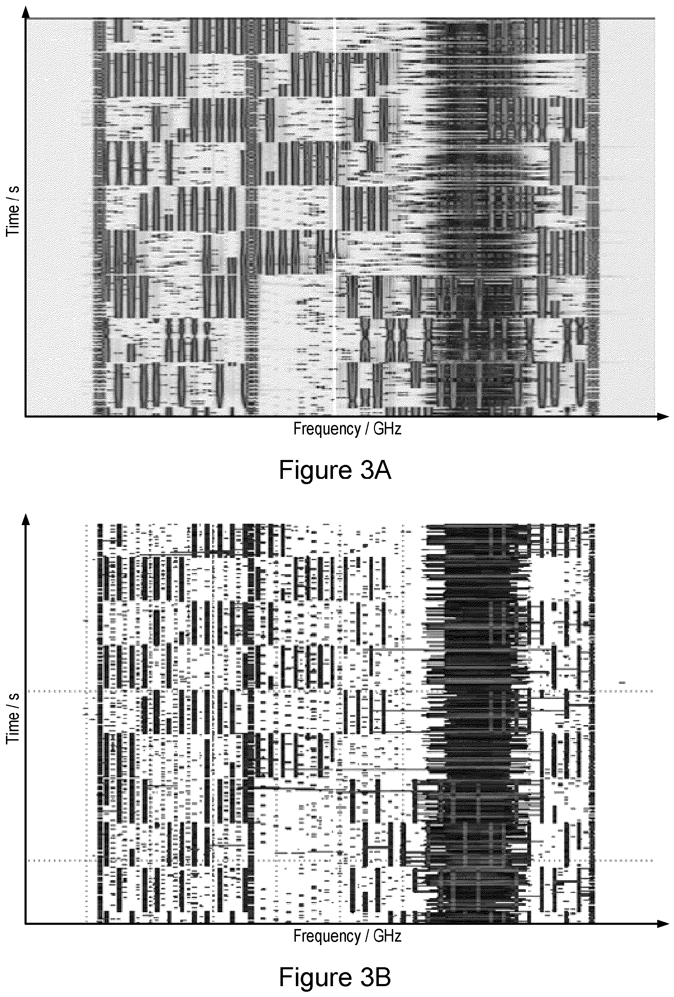

Referring also to Figures 3A and 3B, a comparison of received radio data (Figure 3A) and corresponding identified signals (Figures 3B) is shown.

Figure 3A presents a 2-dimensional histogram (or "heat-map") having frequency along the horizontal x-axis and time along the vertical *y*-axis, with the shading (*z*-axis) corresponding to total power in a given frequency and time bin. Lighter shades represent less power and darker shades indicate greater power.

Figure 3B presents a 2-dimensional histogram (heat-map) corresponding to Figure 3A, except that the shading corresponds to the number of signal detections in a given frequency and time bin. Lighter shades represent fewer detections and darker shades indicate more detections.

In general, there may be more than one signal concurrently active - in particular when the time series of radio data *Eᵣ* spans a range of frequencies *f₂ - f₁* (as is typical). Let the total number of signals active detected during a buffer *BuffR* be denoted by *K* (a positive integer), then starting from a first signal (ordered from earliest to latest signal end time) (step **S₃**), the *k*^{th} of *K* signals is checked to determine whether it ends during the most recent buffer *BuffR* (step **S4**).

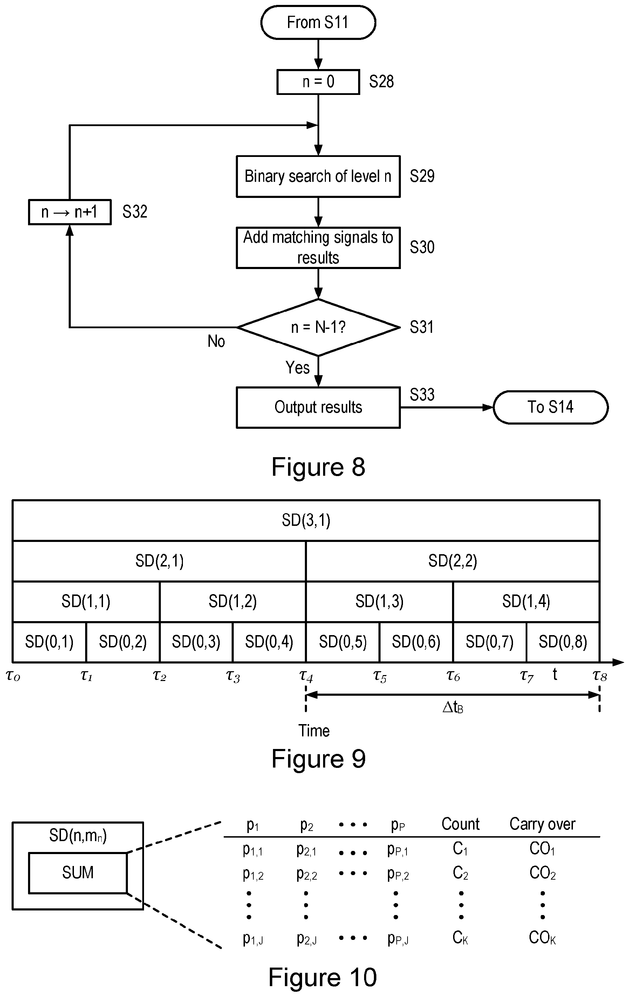

If the *k*^{th} of *K* signals has ended (step **S₄**|Yes), then the signal data for that signal is stored to a detailed database DD (Figure 6B) and summary database SD (Figure 9) (step **S5**). This includes determining a start time *tₛₜₐᵣₜ* and an end time *t_{end}* of that signal, as well as determining one or more signal properties including at least a duration *d* = *t_{end} - tₛₜₐᵣₜ.* Other signal properties may include (without being limited to), one or more of:
- A minimum frequency *fₘᵢₙ* (sometimes also referred to as a "start" frequency);
- A maximum frequency *fₘₐₓ*(sometimes also referred to as an "end" frequency);
- A signal bandwidth *δf* = *fₘₐₓ - fₘᵢₙ*;
- A centre frequency *f_{c}*; and/or
- An integrated signal power W.

The start time *tₛₜₐᵣₜ,* end time *t_{end}* and the one or more signal properties of the signal are saved to the detailed database DD (Figure 6B) and summary database SD (Figure 9).

The detailed database DD (Figure 6B) includes a number 0 ≤ n ≤ *N-1* levels, with *N* an integer ≥ 1 and *n* an index of level within the detailed database DD. Each level *n* includes a number *Mₙ* ≥ 1 of detailed nodes DD(*n,mₙ*) (Figure 6C) with *mₙ* an integer index 1 ≤ m ≤ *Mₙ.* The detailed node DD(*n,mₙ*) within each level *n* sub-divides time *t* into consecutive detailed node periods *Δt_{D}*(*n,mₙ*)*.* Each detailed node DD(*n,mₙ*) has a corresponding node start time *tDₛₜₐᵣₜ*(*n,mₙ*) and end time *tD_{end}*(*n,mₙ*) such that *Δt*_{D}(*n,mₙ*) = *tD_{end}*(*n,mₙ*) - *tDₛₜₐᵣₜ*(*n,mₙ*).

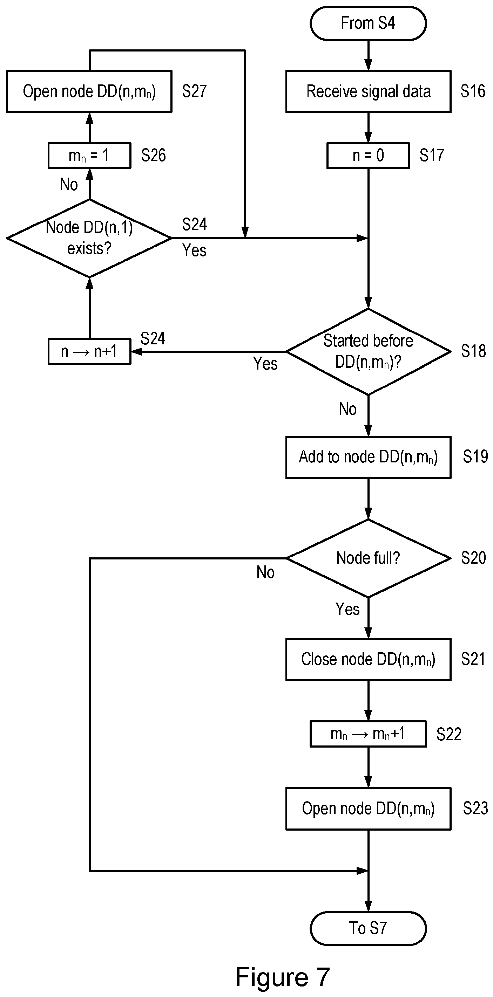

Storing a signal to the detailed database DD includes storing the start time *tₛₜₐᵣₜ,* end time *t_{end}* and the one or more signal properties into the lowest level *n* available detailed node DD(*n,mₙ*) corresponding to a detailed node time period *Δt*_{D}(*n*,*mₙ*) encompassing the start time *tₛₜₐᵣₜ* and end time *t_{end}* of that signal, i.e. *tDₛₜₐᵣₜ*(*n,mₙ*) ≤ *tₛₜₐᵣₜ* ≤ *tD_{end}*(*n,mₙ*) and *tDₛₜₐᵣₜ*(*n,mₙ*) ≤ *t_{end}* ≤ *tD_{end}*(*n,Mₙ*). One suitable example of a method for storing signal data to the detailed database DD (and in the process building the detailed database DD) is shown in Figure 7 and explained hereinafter.

The summary database SD includes two parts, an auxiliary database AD (Figure 13C) and a tree-structure of summary nodes SD(*n,mₙ*) (Figure 9) having a plurality of levels *n*, 0 ≤ *n* ≤ *N-1*. Note that the number *N* of levels n need not be identical between the detailed DD and summary SD databases, however the same index variables are used herein because which database is referenced shall be clear from the context. The summary nodes SD(*n,mₙ*) at each level correspond to consecutive summary node periods *Δt*_{S}(*n,mₙ*) of equal length. Each summary node SD(*n,mₙ*) has a corresponding node start time *tSₛₜₐᵣₜ*(*n,mₙ*) and end time *tS_{end}*(*n,mₙ*) such that *Δt*_{S}(*n,mₙ*) = *tS_{end}*(*n,mₙ*) *- tSₛₜₐᵣₜ*(*n,mₙ*). Each summary node stores a summary data structure, denoted *SUM* herein. The summary data structure *SUM* stores, for each unique combination of quantised (or "binned") signal property values, a count of the number of signals corresponding to the respective summary node period which have that unique combination of quantised signal property values.

For example, let *p₁, p₂, ..., p_{P}* denote a number *P* of signal property values measured for each signal. One approach to the summary data structure *SUM* would be to use a *P-*dimensional array (or alternatively a *P*-dimensional histogram), having corresponding counts of signal numbers as entries. This would typically be very sparse and memory intensive, so preferably each time a new unique set of properties {*p₁, p₂, ..., p_{P}*} is detected (up to the width of quantisation/binning), a new row may be added to a list specifying the set of properties {*p₁, p₂, ..., p_{P}*} and an associated count value *C* (as shown in Figure 10). More preferably, the summary data structure *SUM* is stored as a hashmap. The signal start *tₛₜₐᵣₜ* and end *t_{end}* times are not stored in the summary data structure *SUM,* since this would in practice prevent the intended aggregation of signal property data.

Storing a signal to the summary database SD includes, at each level of the summary database, either:
- updating, based on the signal properties {*p₁, p₂, ..., p_{P}*}, the summary data structures *SUM* of one or more summary nodes SD(*n,mₙ*) having summary node periods *Δt*_{S}(*n,mₙ*) overlapping the duration *d* = *t_{end} - tₛₜₐᵣₜ* of that signal; or
- storing the signal data (i.e tstart, tend, {*p₁, p₂, ..., p_{P}*}) corresponding to that signal in the auxiliary database AD.

Examples of methods for storing signal data to the summary database SD (and in the process building the summary database SD) are shown in Figures 11 and 12, in Figure 15 and 16, and in Figures 20 and 21, and each is explained in further detail hereinafter.

Returning to refer in particular to Figure 2, if the *k*^{th} of *K* signals has not ended (step **S4**|No), then that signal is tracked to the next buffer period (step **S6**). The tracking of signals may be based on, for example, maintaining a frequency sorted list of active signals. This may include determining a start time *tₛₜₐᵣₜ* (or propagating one determined from a previous buffer period), and also determining one or more properties of the partially captured signals, for example a central frequency *f_{c}* or a bandwidth *δf,* in order to allow matching a tracked signal between successive buffer periods. Additionally or alternatively, each buffer *BuffR* may be configured to have a number of samples at the start which correspond to (or overlap) the final samples of the preceding buffer *BuffR,* to allow matching up signals between periods using correlation analysis.

If there are further detected signals to consider (step **S7**|Yes), the next signal detection is processed (steps **S8** and **S4**). Otherwise, provided the collection of the time series of radio data continues (step **S9**|Yes), the next buffer *BuffR* is received (step **S1**) and the processing repeated.

Referring also to Figure 4, an example of tracking and processing signal detections across a number of buffer time periods *Rb·δt* is shown.

In the first buffer period *t₀* ≤ *t < t₁,* three signals S₁, S₂ and S₄ are detected (step **S2**), so that all of them start in the period, *K =* 3. A first signal S₁ also ends (step **S4**|Yes) during the corresponding buffer *BuffR* and is stored to the databases DD, SD (step **S5**). However, the second S₂ and third S₃ signals (presumed to be distinguishable, for example by frequency) do not end (step **S4**|No) and are instead tracked (step **S6**) to the next buffer period *t₁* ≤ *t < t₂.* It may be concluded that a detected signal has ended by, for example, looking for a period of baseline/background power in the corresponding frequency range.

In the second buffer period *t₁* ≤ *t < t₂,* there are again a total of *K =* 3 signal detections. The second signal S₂ ends and is stored, as does the new, fourth signal S₄, however the third signal S₃ continues and is again tracked to the next buffer period.

In the third buffer period *t₂* ≤ *t < t₃,* there are a total of *K =* 2 signal detections. A new fifth signal S₅ starts but also ends, and is processed. The third signal S₃ is once again tracked to the following, fourth buffer period *t₃* ≤ *t < t₄.* No signals end in the fourth buffer period *t₃* ≤ *t < t₄,* and the third signal S₃ continues to be tracked.

In the fifth buffer period *t₄* ≤ *t < t₃,* the third signal S₃ ends, and is processed, whilst a sixth signal S₆ is detected but does not finish. The sixth signal S₆ is tracked into the sixth buffer period *t₅* ≤ *t < t₆*, during which it finishes and is processed.

In the examples described herein, the summary database SD includes a binary tree index. However, this is not essential, and in variations of the methods described herein the summary database may use a trinary tree index, a quaternary tree index, and so forth. Expressed alternatively, in the general case the summary database SD includes an *N*-ary tree index with index *n* ≥ 2.

The auxiliary database AD may have the same structure as the detailed database DD. Further examples are explained in relation to methods illustrated in Figures 11 and 12, in Figure 15 and 16, and in Figures 20 and 21.

The leaf node period *Δt*_{S}(*o,mₙ*) corresponding to each summary node SD(*o,mₙ*) at the leaf (lowest) level (*n*=0) may also be referred to herein as a "base time period".

The quantisation of signal property values *p₁, p₂, ..., p_{P}* for the purposes of the summary data structure *SUM* may alternatively be described as binning. The quantisation (or binning) need not be the same at each level n of the summary database SD. In some implementations, the quantisation (or binning) may become coarser (larger bins) as the level n of the summary database SD increases. As an example, if frequency is binned into bandwidths *δf_{bin}* (for example a minimum resolution determined by the sampling interval *δt* in the usual way) at the lowest level *n*=0, then at a higher level *n* > 0, the frequency binning may switch to an integer multiple of *δf_{bin}.*

Although there is no reason why the methods described herein could not be applied to index and analyse signal detections obtained from an already collected time series of radio data *Eᵣ*, the advantages of the presently described methods are most apparent when the time series of radio data *Eᵣ* is received and stored in real time. The methods described herein enable that detection of signals and storage of detected signals to the detailed database DD and summary database SD can occur at the end of each buffer period *Rb·δt* without interrupting the reception and storage of the time series of radio data *Eᵣ*. In particular, this is because the detailed database DD and summary database SD may be built up in real time. This is possible because detailed databases DD and summary databases SD described herein are built up based on the most recently received data *Eᵣ*, and require no, or only minimal, changes to previously generated nodes of the respective databases SD, DD. In this way, indexing of the received time series of radio data *Eᵣ* can keep up with the reception of the time series of radio data *Eᵣ*, allowing near immediate browsing and analysis once collection is completed. For example, the dataset may be browsed and/or searched at different timebase resolutions, and for any combination of the measured signal properties *p₁, p₂*. ..., *p_{P},* without the need to return to search and analyse the individual signal detections each time the parameters of a visualisation are changed.

Additionally, in some examples the already generated sections of the detailed database DD and the summary database SD may be used to implement browsing, querying and analysis of data during the reception of the time series of radio data *Eᵣ*, without interruption. In this way an operator monitoring a radio spectrum in a region/area may obtain real-time insights into what is occurring, without interrupting recording of the data and potentially missing detections.

In some examples, each summary node SD(*n,mₙ*) and each detailed node DD(*n,mₙ*) is read only once the current time *t* is after the respective node end period *tS_{end}*(*n*,*mₙ*), *tD_{end}*(*n,mₙ*). This need not be explicitly controlled, it is more that the presently described methods focus on the leading edge of time, and do not require doubling back to modify earlier (or "closed") nodes SD(*n,mₙ*), DD(*n,mₙ*) of the databases.

### Method of querying the detailed database and summary database

Referring also to Figure 5, a process flow diagram is shown for a method of querying the detailed database and summary database generated using the methods of the present specification (for example, as shown in Figure 2).

A query is received or generated (step **S10**). As explained hereinbefore a query may be user generated or automatically generated. In an example of a user generated query, a user may wish to generate a 2D histogram plotting, for example, peak signal power against signal duration, for signals occurring within a given time period and frequency band. In another example, a user may use controls to scroll through and/or change a timebase displayed in a GUI for visualising the dataset, and the query may be formulated automatically to update the visualising based on the users input. In other examples, a query may be automatically generated by an analysis program as described hereinbefore.

A query used for explanations herein is made up of query fields including (but not limited to):
- a query start time *tQₛₜₐᵣₜ*;
- a query end time *tQ_{end};* and
- one or more ranges *Δp₁, Δp₂,* ..., *Δp_{P}* of the signal properties *p₁, p₂, ..., p_{P}.*

The ranges *Δp₁, Δp₂,* ..., *Δp_{P}* of the signal properties *p₁, p₂, ..., p_{P}* do not all need to be used for searching, i.e. only a subset of signal properties *p₁, p₂,* ..., *p_{P}* may be searched (equivalently, some of ranges *Δp₁, Δp₂,* ..., *Δp_{P}* may be set to span the entire dataset). The difference between the query start time *tQₛₜₐᵣₜ* and the query end time *tQ_{end}* is a query time period *Δt_{Q}* = *tQ_{end} - tQₛₜₐᵣₜ.*

In response to meeting a condition based on the query fields (step **S11**|Yes), the query is processed using the summary database SD (step **S12**), and otherwise (step **S11**|No), the query is processed using the detailed database DD (step **S13**). An example of processing a query using the detailed database DD is described hereinafter in relation to Figure 8. Examples of processing a query using the summary database SD are described hereinafter in relation to Figures 14 and 18.

The purpose of the condition is to gauge the likely number of signals which may match the query, at least to about the right order of magnitude. Queries likely to return a number of results which is manageable to process in reasonable time using the individual signal detections (i.e. without undue lag from a user's perspective) are processed using the detailed database DD. In practice, number of results which may be manageably processed depends on the computing resources available, and may vary between about 10⁵ and 10⁷. If the likely number of results will be sufficiently large to potentially cause lag/slowdown, then the summary database SD is used to process the query. This is enabled because queries likely to return hundreds or thousands, if not millions or more signal detections, will in any event require aggregation before they can be meaningfully visualised. Therefore, such queries may be resolved using the summary data structures SUM of one or more summary nodes SD(*n,mₙ*) without loss of accuracy.

One example of a suitable condition is the query time period *Δt_{Q}.* The longer the query time period *Δt_{Q},* the larger the number of individual signal detections within the bounds of the query is likely to be. A query period threshold *Δtₜₕᵣₑₛₕ* may be chosen, and the condition may be applied so that for *Δt_{Q}* ≤ *Δtₜₕᵣₑₛₕ* the detailed database DD is used (step **S13**), whilst for *Δt_{Q} > Δtₜₕᵣₑₛₕ* the summary database SD is used instead. The query period threshold *Δtₜₕᵣₑₛₕ* may be predetermined or may be dynamically determined, for example, based on the processing power of hardware executing the method. In other examples, the query period threshold *Δtₜₕᵣₑₛₕ* may be user specified.

Different conditions may be applied based on the query fields specified. For example, if a query is specified spanning the entire time period of the dataset but looking for signals in a queried frequency band *fQ₁* to *fQ₂,* the total number of signals in that frequency band *fQ₁* to *fQ₂* may be estimated by adding up the counts of the summary data structure *SUM* for the root summary node SD(*N*-1,1) which overlap the queried frequency band *fQ₁* to *fQ₂.* If that number exceeds a threshold, the summary database SD is used (step **S12**), whereas if that number is less than or equal to the threshold, the detailed database DD may be used.

In general the goal is to use the detailed database DD up until doing so would be too inefficient in time. This may correspond to a noticeable lag for a user generating the queries whilst browsing the signal detections from the time series of radio data *Eᵣ*. For example, a user may begin to perceive a lag if the time for processing a new query and plotting a visualisation (for example due to scrolling or zooming in a GUI viewing the signal data) started to exceed about 80 ms. The factors which determine how much time the querying of the detailed database will take are dominated by the number of results that will be found by the query, in conjunction with how fast the hardware system is in general (combination of storage read speed and computing processing power). The conditions described hereinbefore, and similar conditions, represent estimating the total number of results which will require processing based on sensible guesses (time threshold *Δtₜₕᵣₑₛₕ*) and root/high level processing of the summary database SD. This represents a good balance between efficiency and detail.

In other examples, the condition (step **S11**) may be based on a lighter weight tertiary data structure, calculated based on the summary data structures, and configured to allow evaluating an indication or upper bound on the number of results a query may produce, or any other function for estimating the number of detections the query will produce.

The querying method shown in Figure 5 may be executed after the reception and recording of the time series of radio data *Eᵣ* has finished. However, the query method and the structures of the detailed database DB and summary database permit querying of the partially completed databases DD, SD during reception and processing of the time series of radio data *Eᵣ*.

### Method of storage to the detailed database

Referring also to Figures 6A to 7, an exemplary method of building the detailed database DD is shown, and illustrated in relation to a worked example.

Figure 6A schematically illustrates a set of signals in terms of start *tₛₜₐᵣₜ* and end *t_{end}* times. Figure 6B schematically illustrates the contents of a detailed database formed by applying the method of Figure 7 to the example shown in Figure 6A. Figure 6C schematically illustrates the structure of a single detailed node DD(*n,mₙ*). Figure 7 shows a process flow diagram of a method of forming the detailed database.

Referring in particular to Figure 6C, in this example each detailed node DD(*n*, *mₙ*) stores up to a threshold number *Kₘₐₓ* of signals. Each signal is stored as signal data 14 which includes at least the signal start time *tₛₜₐᵣₜ,* the signal end time *t_{end},* and the values of the one or more signal properties *p₁, p₂,* ..., *p_{P}.* The threshold number *Kₘₐₓ* of signals which each detailed node DD(*n*, *mₙ*) can store may be a function of level *n*, i.e. *Kₘₐₓ*(*n*), and may be predetermined or set by a user prior to starting to receive and process the time series of radio data *Eᵣ*.

Each level of the detailed database DD may include one active detailed node DD(*n,mₙ*) having only a node start time *tₛₜₐᵣₜ,* and any number of closed detailed nodes DD(*n*,*mₙ*), each having a node start time *tₛₜₐᵣₜ* and a node end time *t_{end}* defining the corresponding detailed node period *Δt*_{D}(*n*,*mₙ*). For example, referring in particular to Figures 6A and 6B, at the end of the period shown (just after *t₁₁*), the detailed database DD includes:
- At level *n*=0, DD(0, 4) is the active detailed node whilst DD(o, 1), DD(0, 2) and DD(0, 3) are closed detailed nodes;
- At level *n*=1, DD(1, 2) is the active detailed node whilst DD(1, 1) is a closed detailed node; and
- At level *n*=2, DD(2,1) is the active detailed node, and there are not yet any closed detailed nodes.

The detailed database DD shown in Figure 6B is not a tree structure - the detailed nodes DD(*n,mₙ*) at level *n*=1 do not point to the detailed nodes DD(*n,mₙ*) at level *n*=0, and are not pointed to by the detailed nodes DD(*n,mₙ*) at level *n*=2. Consequently there is no requirement for the detailed node start *tDₛₜₐᵣₜ*(*n,mₙ*) and end *tD_{end}*(*n,mₙ*) times, or the corresponding detailed node periods *Δt_{D}*(*n,mₙ*), of one level n to have any relationship to those of the adjacent levels *n*±1.

Referring in particular to Figure 7, the method of building the detailed database follows detection of a signal (step **S2**) and determination of the signal data 14 (step **S4**) including the at least the signal start time *tₛₜₐᵣₜ,* the signal end time *t_{end},* and the values of the one or more signal properties *p₁, p₂, ..., p_{P}.*

The signal data 14 is received (step **S16**). For example, at time *t₁* in Figure 6A, signal data 14 corresponding to signal S₁ is received, or at time *t₈*, signal data 14 corresponding to signal S₈ is received, and so forth.

Starting from the lowest level (step **S17**) of the detailed database DD, it is tested whether the start time *tₛₜₐᵣₜ* of the signal is before the node start time *tDₛₜₐᵣₜ*(*n,mₙ*) of the current active detailed node DD(*n,mₙ*) at the searched level *n* (step **S18**). The detailed database is originally initialised with a single node D(0,1), which is active with a node start time *tDₛₜₐᵣₜ*(0,1) equal to the start time *t₀* of the time series.

If no (step **S18**|Yes), i.e. if the signal start time *tₛₜₐᵣₜ* is equal to or after the node start time *tDₛₜₐᵣₜ*(*n,mₙ*), the signal data 14 of the signal are stored to the active node DD(*n,mₙ*) (step **S19**). Optionally, the section of the time series data *Eᵣ* corresponding to the signal may also be included in the signal data 14 (for example IQ data). Alternatively, the signal data 14 may optionally include a pointer to the start of the signal in the time series data *Eᵣ*.

After saving signal data 14 to a detailed node DD(*n,mₙ*), it is tested whether that node DD(*n,mₙ*) is now full, i.e. if the numbers of signal data 14 stored equals the threshold *Kₘₐₓ* (step **S20**). If the node is not full (step **S20**|No), then we proceed (step **S7**) to the next signal or buffer *BuffR* as appropriate. However, if the node is full (step **S20**|yes), then the current node DD(*n,mₙ*) is closed by assigning a detailed node end time *tD_{end}*(*n,mₙ*) equal to the signal end time *t_{end}* (step **S21**), incrementing the index *mₙ* at the searched level to *mₙ+*1 (step **S22**), and opening a new active node DD(*n,mₙ*) by assigning the detailed node start time *tDₛₜₐᵣₜ*(*n,mₙ*) equal to the signal end time *t_{end}.*

Returning to step **S18**, if the start time *tₛₜₐᵣₜ* of the signal is before the node start time *tDₛₜₐᵣₜ*(*n,mₙ*) of the current active detailed node DD(*n,mₙ*) at the searched level n (step **S18**|Yes), then the searched level is incremented to *n*+1 (step **S24**). If the first node DD(n,1) at the new searched level exists (step **S24**|(Yes), the test (step **S18**) is repeated. If the first node DD(n,1) at the new searched level does not yet exist (step **S24**|No), the index *mₙ* is initialised *mₙ* = 1 (step **S26**) and the first node DD(*n*,1) at the new searched level *n* is opened as an active node, with the node start time *tDₛₜₐᵣₜ*(*n,mₙ*) set equal to the start time *tₒ* of the time series of radio data *Eᵣ* (step **S27**).

The method of Figure 7 may be better understood by reference to the example shown in Figures 6A and 6B, in which the threshold storage capacity for all levels of detailed nodes DD(*n,mₙ*) is set to *Kₘₐₓ* = 2 signal data per node.

At the end of signal S₁ at time *t₁,* the corresponding signal data 14 is stored to active detailed node DD(0,1) having start time *tDₛₜₐᵣₜ*(*n,mₙ*)*= tₒ* (step **S18** evaluates to 'no' for *n*=0, followed by steps **S19** and **S20**|No). At the end of signal S₂ at time *t₂,* the corresponding signal data 14 is again stored to active detailed node DD(0,1). However this time the node if full (step **S20**|yes), so the detailed node DD(0,1) is closed with node end time *tD_{end}*(0,1) *= t₂* (step **S21**), and the next detailed node DD(0,2) is opened with node start time *tDₛₜₐᵣₜ*(0,2) *= t₂.*

In similar fashion, signal data 14 corresponding to signals S₃ and S₄ are stored to detailed node DD(0,2), which is then closed and a new detailed node DD(0,3) is opened with node start time *tDₛₜₐᵣₜ*(0,3) *= t₄.* When signal S₅ ends at *t₅,* the start time *tₛₜₐᵣₜ* is before *t₄,* meaning that signal S₅ cannot be stored to level *n*=0 (step **S18**|Yes), and the first detailed node DD(1,1) is opened at level n=1 (steps **S24** through **S27**) so that signal data 14 of signal S₅ may be stored to it.

Continuing though Figure 6A, signal S₆ can be stored to DD(0,3). Signal S₇ is stored to and completes DD(1,1), and a new active detailed node DD(1,2) is opened on level *n* =1. Signal S₈ is stored to and completes DD(0, 3), and a new detailed node DD(0, 4) is made active. Signal S₉ cannot be stored to either of the active nodes DD(0, 4) or DD(1, 2), so it is necessary to open a first, active node DD(2, 1) at level *n* = 2 to store the corresponding signal data 14. Signal S₁₀ cannot be stored to active node DD(0, 4), but can be stored on the level above *n* = 1 in DD(1, 2). Finally for the signals shown in Figure 6A, signal S₁₁ is stored into the level *n* = 0 active node DD(0,4), which still has capacity for another set of signal data 14.

The method shown in Figure 7 uses specific tests and orders of operations. However, any other suitable method may be used instead. A suitable method will include searching successively increasing levels of the detailed database DD until an active detailed node DD(*n,mₙ*) at the searched level n has a node start time *tDₛₜₐᵣₜ*(*n,mₙ*) before the start time *tₛₜₐᵣₜ* of the signal, and in response storing signal data 14 corresponding to that signal to the active detailed node DD(*n,mₙ*) at the searched level *n*. If the active detailed node DD(*n,mₙ*) at the searched level *n* is then storing a number of signals equal to the corresponding threshold number of signals *Kₘₐₓ*, a suitable method will also include closing the active detailed node DD(*n,mₙ*) at the searched level *n* by assigning the end time *t_{end}* of that signal as the node end time *tD_{end}*(*n,mₙ*), and opening a new active detailed node DD(*n*,*mₙ*+1).

The method of Figure 7 does not generate a tree structure. Instead, each level *n* of the detailed database DD is effectively independent of the levels *n*±1 below and/or above. However, this is not essential and in other examples the detailed database DD may take the form of a tree-structure (not shown), for example binary, ternary and so forth. In such examples, the detailed node time periods *Δt*_{D}(*n,mₙ*) of a level *n* will be equal to each other, and also to a multiple of the node time periods *Δt*_{D}(*n-1,mₙ₋₁*) of the level *n*-1 below (excepting a leaf level). Such tree-structured detailed databases DD can still be built in real-time as data is obtained, for example, using the methods disclosed in WO 2021/171018 A1 (referring in particular to the methods described in relation to Figures 2 to 4).

### Method of processing a query using the detailed database

In the general case of processing the query using the detailed database DD, starting from the lowest level of the detailed database DD, successively increasing levels *n* of the detailed database DD are searched and signal data 14 of each signal which matches all the query fields *tₛₜₐᵣₜ, t_{end},* and one or more ranges *Δp₁, Δp₂,* ..., *Δp_{P}* of the signal properties *p₁, p₂,* ..., *p_{P}* is added to a detailed query result *qDᵣₑₛ.* A range *Δpₚ* does not need to be specified for every signal property *pₚ,* for example a user may wish to recover all signals having frequencies within a given range, without concern about any other signal properties *pₚ.*

Referring also to Figure 8, a process flow diagram is shown for a method of processing a query using a detailed database DD corresponding to the detailed database DD structured as illustrated in Figures 6B and 6C and produced using the method of Figure 7.

When processing the query using the detailed database DD (i.e. following step **S11**|No in Figure 5), starting from the lowest level *n*=0 of the detailed database DD (step **S28**), at each level *n* a search (for example a binary search) of that level *n* is conducted (step **S29**), and the signal data 14 of each signal which matches all the query fields *tₛₜₐᵣₜ, t_{end},* and the one of more ranges *Δp₁, Δp₂,* ..., *Δp_{P}* of the signal properties *p₁, p₂, ..., p_{P}* is added to the detailed query result *qDᵣₑₛ* (step **S30**). If the searched level n is not the maximum level *N-1* (step **S31**|No), the level is incremented to *n*+1 and the next level searched. Once the searched level *n* is the maximum level *N-1* (step **S31**|Yes), the detailed query result *qDᵣₑₛ* is output (step **S33**) for display/storage etc (step **S14**).

In this way, each level *n* may be swiftly searched, and results from any/all of the levels 0 ≤ *n* ≤ *N-1* are found and added to the detailed query result *qDᵣₑₛ.*

A signal (i.e. the corresponding signal data 14) matches all of the query fields if it has a start time *tₛₜₐᵣₜ* after the query start time *tQₛₜₐᵣₜ,* has an end time *t_{end}* before the query end time *tQ_{end},* and has signal properties *p₁, p₂, ..., p_{P}* within the corresponding received one or more ranges *Δp₁, Δp₂,* ..., *Δp_{P}* of the signal properties *p₁, p₂,* ..., *p_{P}. Δp₁, Δp₂,* ..., *Δp_{P}* of the signal properties *p₁, p₂,* ...,*p_{P}*

The detailed query result *qDᵣₑₛ* may include, or take the form of, a list of the start times *tₛₜₐᵣₜ,* end times *t_{end}* and corresponding signal properties *p₁, p₂, ..., p_{P}* of each signal found in the detailed database DD matching the query fields *tₛₜₐᵣₜ, t_{end}, Δp₁, Δp₂,* ..., *Δp_{P}.*

The method of processing a query using the detailed database DD may include aggregating one or more signal properties *p₁, p₂, ..., p_{P}* stored in the detailed query result *qDᵣₑₛ.* The signal properties *p₁, p₂, ..., p_{P}* to be aggregated may be predetermined, or may be selected by a user when preparing the query at the time of running the query. Signal properties *p₁, p₂, ..., p_{P}* may be aggregated to generate, based on the values stored in the detailed query result *qDᵣₑₛ,* one or more of histograms, bar charts scatter plots, surface plots and so forth. For example, two-dimensional histograms as shown in Figures 3A and 3B. Aggregating may include using the detailed query result *qDᵣₑₛ* to populate a aggregated data structure *D_{agg}* which stores, for each unique combination of a subset of the quantised signal property values *p₁, p₂, ..., p_{P},* a count of the number of signals in the detailed query result which have that unique combination of the subset of the quantised signal property values *p₁, p₂,* ..., *p_{P}.* In other words, the aggregated data structure *D_{agg}* for the detailed query result *qDᵣₑₛ* may be analogous to the summary data structures *SUM* of the summary database, except populated using the detailed query result *qDᵣₑₛ* instead of the signals corresponding to a summary node period Δ*t*_{S}(*n,mₙ*).

The aggregated data structure *D_{agg}* may be updated every time a new signal matching the query fields is found in the detailed database DD and added to the detailed query result *qDᵣₑₛ.* Alternatively, the aggregation of one or more signal properties may be updated in response to the number of results added to the detailed query result *qDᵣₑₛ* since last updating the aggregation is equal to a threshold value. A list is preferably reset after updating the aggregation of one or more signal properties *p₁, p₂, ..., p_{P}* in the aggregated data structure *D_{agg}.*

### First method of storage to the summary database

Referring also to Figures 9 to 12, a first exemplary method of building the summary database SD is illustrated.

Figure 9 schematically illustrates the structure of the tree structure of the summary database, and Figure 10 schematically illustrates the structure of a single summary node SD(*n,mₙ*).

Figure 11 shows a process flow diagram of the first exemplary method of building the summary database SD, and Figure 12 shows a process flow diagram for a method of propagating data to higher levels *n* within the tree structure (used at step **S40** in Figure 11).

Referring in particular to Figure 9 a binary tree structure of summary nodes SD(*n,mₙ*) will be referred to in explaining the first exemplary method. However, other types of tree structure may be used instead, such as ternary, quaternary and so forth. Each leaf summary node SD(*o,mₙ*) has an equal duration Δ*t_{S}*(o*,mₙ*) = *Δτ.* In the first exemplary method, the summary database SD comprises, at the lowest level, up to a number *M_{b}* of active leaf summary nodes SD(*o,mₙ*) corresponding to a summary buffer period *Δt_{buff} = M_{b}Δτ,* and any number of closed leaf summary nodes corresponding to earlier summary node periods. The summary buffer period *Δt_{buff}* is independent of the buffers *BuffR* used in acquiring the time series of radio data *Eᵣ*.

For example, referring in particular to Figure 9, if the present time *t* is during leaf summary node SD(0,8), i.e. *τ₇* ≤ *t < τ₈,* then a summary buffer of length *M_{b}* = 4 would include nodes SD(0, 5), SD(0, 6), SD(0, 7) and SD(0, 8). The summary buffer period *Δt_{buff}* is important for the handling of relatively longer signals in the first exemplary method.

Referring in particular to Figure 10, each summary node SD(*n,mₙ*) includes a summary data structure *SUM.* In the example illustrated, the summary data structure SUM takes the form of a listing, wherein the *j*^{th} of *J* unique combinations *p_{1,j}, p_{2,j},* ..., *p_{P,j}* of the signal properties *p₁, p₂,* ..., *p_{P}* stored in the structure *SUM* has a corresponding count value *Cⱼ* and carry-over value *COⱼ.* The carry-over values *COⱼ* are only used internally in the first exemplary method. In practice, the same data need not be stored as a list, and may instead be stored as an array, a hashmap, or any other suitable data storage structure.

Referring in particular to Figure 11, the first exemplary method shall be explained. For the sake of explanation, SD(0,*m*) corresponds to the most recent leaf summary node, and SD(o,*m*-*M_{b}*+1) corresponds to the oldest. The leaf summary nodes SD(o,*m*-*M_{b}*+1), ..., SD(0,*m*-1), SD(0,*m*) are the active summary nodes, and all other summary nodes at the leaf level *n*= 0 are closed.

The first exemplary method of building the summary database follows detection of a signal (step **S2**) and determination of the signal data 14 (step **S4**) including the at least the signal start time *tₛₜₐᵣₜ,* the signal end time *t_{end},* and the values of the one or more signal properties *p₁, p₂,* ..., *p_{P}.*

The signal data 14 is received (step **S34**). If the start time *tₛₜₐᵣₜ* and end time *t_{end}* of the signal are wholly within the summary buffer period *Δt_{B}* (step **S35**|Yes), then the summary data structures *SUM* are updated for every active leaf summary node SD(0,*mₒ-M_{b}*+1), ..., SD(0,*mₒ*-1), SD(o,*mₒ*) having a summary node period *Δt_{S}*(*o,mₒ*) overlapping the duration *d* = *tₛₜₐᵣₜ - t_{end}* of the signal (step **S36**). For example, assuming that the level of quantisation in the summary data structures *SUM* corresponds to the smallest measurable difference in the signal properties *p₁, p₂, ..., p_{P}* of the signal, if a matching row *p_{1,j}, p_{2,j}, ..., p_{P,j}* already exists, the count value *Cⱼ* is simply increased by one, i.e. *Cⱼ* → *Cⱼ*+1. However, if a matching row *p_{1,j}, p_{2,j},* ..., *p_{P,j}* does not already exist, it is added and the new count value *Cⱼ* initialised at one, i.e. *Cⱼ* = 1.

The carry-over values *COⱼ* for each row denoting how many signals having the identical combination of signal properties *p₁, p₂, ..., p_{P}* (up to the quantisation/binning) were also present in the preceding summary node SD(*n,mₙ*). For example, if a signal started during SD(0,*m*-*M*+₁) and finished during SD(0,*m*-₂), then for the corresponding combination of signal properties *p₁, p₂, ..., p_{P} in* the summary data structures *SUM,* one would be added to the count values *Cⱼ* in each of the summary nodes SD(0,*m*-*M*+1) to SD(0,*m*-2), but the carry-over count would only be incremented for each of the summary nodes SD(0,*m*-*M*+2) to SD(0,*m*-2). In other words, the carry-over count is not incremented in the summary data structure *SUM* corresponding to the leaf summary node SD(*o,mₙ*) during which a signal started. These carry-over counts *COⱼ* are used in the first method of propagating summary data illustrated in Figure 12 (and further described hereinafter).

If the start time *tₛₜₐᵣₜ* and end time *t_{end}* of the signal are not wholly within the summary buffer period *Δt_{B}* (step **S35**|No), and the end time *t_{end}* of the signal is within the summary buffer period *Δt_{B}* (i.e. the start time *tₛₜₐᵣₜ* of the signal is before the summary buffer period *Δt_{B}*) (step **S37**|No), then the signal data 14 of the signal is stored to an auxiliary database AD (step **S38**). The auxiliary database AD is preferably built using the same structure and methods as the detailed database, for example, using the structure and methods shown in Figures 6B, 6C and 7. Whilst a significant majority of signals can be captured in the summary data structures *SUM* of the summary nodes SD(*n,mₙ*) when the durations are set appropriately, some cannot and are stored in the auxiliary database to prevent loss of data fidelity. This approach allows aggregating nearly all data, meaning that the number of signals leftover in the auxiliary database remains manageable.

If the start time *tₛₜₐᵣₜ* and end time *t_{end}* of the signal are not wholly within the summary buffer period *Δt_{B}* (step **S35**|No), and the end time *t_{end}* of the signal is after the summary buffer period *Δt_{B}* (step **S37**|Yes), the buffer period *Δt_{B}* is advanced and the checks (step **S35**, **S37**) are repeated until either:
- the summary data structures *SUM* are updated for every active leaf summary node SD(0,*mₒ-M_{b}*+1), ..., SD(0,*mₒ*-1), SD(o,*mₒ*) having a summary node period *Δt_{S}*(*0,mₒ*) overlapping the duration d = *tₛₜₐᵣₜ - t_{end}* of the signal (step **S36**); or
- the signal data 14 corresponding to the signal is stored into the auxiliary database AD.

In the particular example shown in Figure 11, the shifting of the buffer period *Δt_{B}* is accomplished by adding the next leaf summary node SD(o,*mₒ*+1) (step **S39**) and, provided the summary buffer is already full (step **S40**|Yes), The data in leaf summary node SD(0,*mₒ-M_{b}+*1) is propagated to levels *n* > 0 (step **S41**). The propagation step (step **S41**) may also include adding a new top level (i.e. increasing *N*), and is described in further detail in Figure 12. The carry-over values *COⱼ* are used when propagating data to prevent overcounting signals. Once data has been propagated to levels *n* > 0 (step **S41**), the buffer is shifted by incrementing the index *mₒ* → *mₒ*+1 (step **S42**) before returning to the first test (step **S35**). If the buffer is not yet filled (step **S40**|No), the propagation (step **S41**) is skipped until the buffer is filled (this is only relevant in the first *M_{b}* leaf summary node periods *Δt_{S}*(o*,*mₙ)).

The oldest summary node SD(o, *mₒ-M_{b}*+1) may also be written/saved to a storage device 6, or flagged as read only, when shifted out of the summary buffer. In practice this may not require doing anything specific beyond carrying out the steps (**39** to **S42**).

The propagation of data to levels *n* > 0 (step **S41**) generally involves propagating the corresponding summary data structure *SUM* of node SD(o*,mₒ-M_{b}*+1) to all higher level *n* > 0 summary nodes SD(*n*>0,*mₙ*) from which the oldest active leaf summary node SD(0,*mₒ-M_{b}*+1) is a descendant. The propagation (step **S41**) must enforce the condition that each summary node SD(*n*>o,*mₙ*) only counts each signal once in the respective summary data structure *SUM.* This is accomplished in the first exemplary method by using the carry-over counts *COⱼ* to track signals extending over multiple summary nodes SD(*n,mₙ*).

For example, referring in particular to Figure 12, the propagation of summary node SD(*n,mₙ*) data to higher levels shall be described.

The method of propagation may be carried out relative to any level *n*, and indeed is carried out at step **S49** of the method illustrated in Figure 12. In other words, the process of propagation of data in summary nodes SD(*n,mₙ*) to higher levels *n* >0 may be recursive as needed.

Data is only propagated to the most recent summary node SD(*n,mₙ*) for *n* > 0, with that node being added if necessary.

A command is received to propagate data of a node SD(*n,mₙ*) to higher levels (step **S43**). For example, this is applied to the summary node SD(0,*mₒ-M_{b}*+1) at step **S41** in Figure 11, and to the data of a summary node SD(*n+*1,*mₙ₊₁*) at step **S49** of Figure 12. The data to be propagated is at least the summary data structure *SUM,* but may include further data in other examples.

It is tested whether the summary node time period *Δt_{S}*(*n,mₙ*) of the propagated node SD(*n,mₙ*) fits wholly within summary node time period *Δt_{S}*(*n,mₙ*) of the most recent summary node SD(n*+*1,*mₙ₊₁*) at the next level up *n*+1 (step **S44**). In other words, whether *tSₛₜₐᵣₜ*(*n+1*,*mₙ₊₁*) ≤ *tSₛₜₐᵣₜ*(*n,mₙ*) ≤ *tS_{end}*(*n+1,mₙ₊₁*) and *tSₛₜₐᵣₜ*(*n+1,mₙ₊₁*) ≤ *tS_{end}*(*n,mₙ*) ≤ *tS_{end}*(*n+1,mₙ₊₁*).

If the summary node time period *Δt_{S}*(*n,mₙ*) of the propagated node SD(*n,mₙ*) wholly fits (step **S44**|Yes) and the node at level *n*+1 is newly generated (step **S45**|Yes), i.e. created since step **S43** of the current execution of the propagation method, then the data from the propagated node SD(*n,mₙ*) is added to the node SD(n*+*1,*mₙ₊₁*) (step **S46**). In other words, the summary data structure *SUM* of propagated node SD(*n,mₙ*) is added to the (in this case blank) summary data structure *SUM* of node SD(*n+*1,m*ₙ₊₁*).

However, if the summary node time period *Δt_{S}*(*n,mₙ*) of the propagated node SD(*n,mₙ*) wholly fits (step **S44**|Yes) but the node at level *n*+1 already existed (step **S45**|No), the data from the propagated node SD(*n,mₙ*) is added to the node SD(*n+*1,*mₙ₊₁*) with the carry-over values *COⱼ* subtracted (step **S47**). In other words, the summary data structure *SUM* of propagated node SD(*n,mₙ*) is added to the summary data structure *SUM* of node SD(*n+*1,*mₙ₊₁*) after first subtracting the carry-over values *COⱼ* from corresponding count values *Cⱼ.* Carry-over values *COⱼ* are also used for levels n > 0 to prevent overcounting when propagating from level *n* to *n*+1.

When the summary node time period *Δt_{S}*(*n,mₙ*) of the propagated node SD(*n,mₙ*) does not wholly fit within the summary node time period *Δt_{S}*(*n,mₙ*) of the most recent summary node SD(*n+*1,*mₙ₊₁*) at the next level up *n*+1 (step **S44**|No), the most recent summary node SD(*n*+1, *mₙ₊₁*) at level *n*+1 is closed (step **S48**). This may involve writing the summary node SD(*n*+1, *mₙ₊₁*) to a storage device 6 or flagging as read only, but in practice may not require doing anything specific beyond carrying out the following steps (**S49** to **S51**). The data in summary node SD(*n*+1, *mₙ₊₁*) is propagated to levels *n* + 2 and higher (step **S49**), which is in practice a command (step **S43**) to propagate node SD(*n*+1, *mₙ₊₁*). Once data has been propagated to levels *n* + 2 and higher (step **S49**), the most recent summary node SD(*n+*1,*mₙ₊₁*) is shifted by adding the next summary node SD(*n*+1,*mₙ₊₁*+1) (step **S50**) and incrementing the index *mₙ₊₁* → *mₙ₊₁*+1 (step **S51**) before returning to the initial test (step **S44**).

Alternatively, any other suitable method for propagating the summary data structures SUM to higher levels *n* > 0 whilst avoiding double counting of signals may be used.

Referring also to Figures 13A to 13C, a worked example of applying the first exemplary method of building the summary database SD will be explained. Figure 13A reproduces Figure 6A for convenience in comparing with Figures 13B and 13C. Figure 13B schematically illustrates the tree structure of the summary database SD generated for the signals shown in Figure 13A using the first exemplary method, and Figure 13C schematically illustrates the auxiliary database of the summary database SD generated for the signals shown in Figure 13A using the first exemplary method.

In Figures 13B and 13C, the notation S_{4,5,6} denotes for brevity the signals S₄, S₅ and S₆. Similarly, S_{6,8} denoted signals S₆ and S₈, and so forth. A buffer size *M_{b}* = 4 was used for the following.

Initially, only one summary leaf node SD(0,1) exists. At time *t₁* = *τ₁,* the first signal S₁ ends. The index *mₒ* = 1 and signal S₁ is wholly within the period *Δt_{S}*(0,1) (step **S35**|Yes). The signal S₁ only overlaps leaf summary node SD(0,1) (and there are not yet other leaf summary nodes SD(o,*mₒ*) in the summary buffer), so the signal properties *p₁, p₂, ..., p_{P}* of signal S₁ are added to the summary data structure *SUM* of leaf summary node SD(0,1) (step **S36**).

Signal S₂ ends at time *t₂,* and as not yet updated the index *mₒ* = 1 still. Therefore, signal S₂ is not wholly within the summary buffer period *Δt_{B}* = *Δt_{S}*(0,1) (step **S35**|No), and ends after the present end of *Δt_{B}* which is at *τ₁* (step **S37**|Yes). Through steps **S39** to **S42,** new leaf summary node SD(0,2) is added, and as the summary buffer is not yet full (step **S40**|No), propagation (step **S41**) is skipped and *m₀* is updated to *m₀* = 2 (step **S42**). The end of the summary buffer is now at *τ₂*, corresponding to both SD(0,1) and SD(0,2) being within the summary buffer. The signal S₂ is now wholly within the updated summary buffer period *Δt_{B}* ending at *τ₂,* and the signal properties *p₁, p₂,* ..., *p_{P}* of signal S₂ are added to the summary data structures *SUM* of both leaf summary nodes SD(0,1) and SD(0,2) which are within the summary buffer and with overlap S₂ (step **S36**). Carry-over count is added to the summary data structure *SUM* of SD(0,2) because S₂ is carried over from SD(0,1).

Signal S₃ ends at time *t₃,* at which time the summary buffer covers from *t₀* to *τ₂.* Applying the method of Figures 11 and 12, the buffer is expanded by adding SD(0,3), and the signal properties *p₁, p₂, ..., p_{P}* of signal S₃ are added to the summary data structure of SD(0,3). Signal S₄ ends at time *t₄,* and again the summary buffer is expanded by adding SD(0,4). The summary buffer is now filled, and any further additions will involve removing SD(0,1) from the end. The signal properties *p₁, p₂,* ..., *p_{P}* of signal S₄ are added to the summary data structures of both SD(0,3) and SD(0,4) which overlap the signal, with SD(0,4) also including a carry-over count *C*O. Signal S₅ ends at time *t₅,* which remains within the summary buffer period of *Δt_{B}* and the signal properties *p₁, p₂, ..., p_{P}* of signal S₅ are added to the summary data structure of SD(0,4).

Signal S₆ ends at time *t₆*, after the end of the summary buffer at *τ₄*. New leaf summary nodes SD(0,5) and SD(0,6) are added iteratively before signal S₆ fits within the new summary buffer covering SD(0,3) to SD(0,6), and the signal properties *p₁, p₂, ..., p_{P}* of signal S₄ are added to the summary data structures of each of SD(0,4), SD(0,5) and SD(0,6) which overlap the signal. When SD(0,1) is removed from the end of the summary buffer, level n=1 node SD(1,1) is opened and the summary data structure *SUM* of SD(0,1) is copied over. When SD(0,2) is subsequently shifted from the end of the summary buffer, the summary data structure *SUM* is propagated, but will not change the data of SD(1,1), because the carry-over value CO of signal S₂ will cancel the count value C and prevent double counting of signal S₂ in SD(1,1).

Signal S₇ ends at time *t₇*, coinciding with the end of the summary buffer at *τ₄*. However, referring in particular to Figure 13C, since signal S₇ ends within the summary buffer and started before it (step **S35**|No followed by step **S37**|No), the signal data 14 of signal S₇ are instead stored to the auxiliary database AD.

The tree structure of summary nodes SD(*n,mₙ*) continues to be built up in this way, as shown in Figure 13B. When the reception of the time series of radio data *Eᵣ* finishes, the remaining leaf summary nodes SD(*o,mₙ*) in the summary buffer are propagated, one at a time from oldest to newest, followed by adding any summary nodes SD(*n,mₙ*) necessary to complete the tree structure with a single root node SD(*N-1*,1).

### First method of querying the summary database

Referring also to Figure 14, a process flow diagram is shown for a method of processing a query using a summary database SD corresponding to the summary database SD structured as illustrated in Figures 9 and 10 and produced using the method of Figures 11 and 12.

When processing the query using the summary database SD (i.e. following step **S11**|Yes in Figure 5), the query processing level *n_{Q}* of the summary database SD tree structure is determined based on the query time period *Δt_{Q}* (step **S53**). The query processing level *n_{Q}* may be a level of the summary database SD tree structure for which the time period *Δt_{S}*(*n_{Q},mₙ*) corresponding to each summary node has the minimum difference to a predetermined or dynamically determined fraction of the query time period *Δt_{Q}.* For example, the predetermined fraction may be 1/50 and 1/1000, so that the query processing level *n_{Q}* may correspond to a level at which the time period *Δt_{S}*(*n_{Q},mₙ*) corresponding to each summary node is closest to equalling the predetermined fraction of the query time period *Δt_{Q}.*

For each summary node SD(*n_{Q},m_{nQ}*) at the query processing level *n_{Q}* having a summary node period *Δt_{S}*(*n_{Q},mₙ*) overlapping the query time period *Δt_{Q},* any entry in the corresponding summary data structure *SUM* which matches the query fields, *tₛₜₐᵣₜ, t_{end},* and any specified ranges *Δp₁, Δp₂,* ..., *Δp_{P},* is added to the summary query result *qSᵣₑₛ* (step **S54**). The search in time can only use the summary node time data *tSₛₜₐᵣₜ*(*n,mₙ*), *tS_{end}*(*n,mₙ*), *Δt_{S}*(*n_{Q},mₙ*) because the summary nodes SD(*n_{Q},m_{nQ}*) do not store the individual signal start and end times *tₛₜₐᵣₜ, t_{end}.*

The auxiliary database AD is also searched to find any signal data 14 stored therein and matching the query fields (step **S55**). Any matches are processed to add the signal data to the summary query result *qSᵣₑₛ.*

The summary query result *qSᵣₑₛ* is output (step **S56**) for display/storage etc (step **S14**).

In this way, the summary database SD may be quickly searched at a query level *n_{Q}* which is set based on the query time period *Δt_{Q},* meaning that the search will be conducted at a pre-existing level of aggregation, saving considerable time and processing operations. For many purposes, in particular but not limited to preparing visualisations such as graphs or heat maps, conducting the query as a finer timescale would in any event be pointless due to finite resolution of an output display and/or a perceptibility to a user.

The summary query result *qSᵣₑₛ* may take the form of a list. When an entry in the summary data structure SD which matches the query fields is found, a new entry may be added to the list including the unique combination of quantised signal property values *p₁, p₂, ..., p_{P}* corresponding to that entry and corresponding summary node start *tSₛₜₐᵣₜ*(*n,mₙ*) and end *tS_{end}*(*n,mₙ*) times. When signals are added from the auxiliary database AD, a new entry may be added to the list including the signal property values corresponding to that signal data 14, and corresponding signal start *tₛₜₐᵣₜ* and end *t_{end}* times, and the count value *Cⱼ* may be assigned as 1 (one).

The method may include aggregating one or more signal properties stored in the summary query result in the same way as aggregating signal as for signal properties stored in the detailed query result. Aggregating one or more signal properties stored in the summary query result may be additionally weighted based on the count number corresponding to each entry.

### Second method of storage to the summary database

Referring also to Figures 15 and 16, a second exemplary method of building the summary database SD is illustrated.

Figure 15 shows a process flow diagram of the second exemplary method of building the summary database SD, and Figure 16 shows a process flow diagram for a method of propagating data to higher levels n within the tree structure (used at step **S93** in Figure 15).

The summary nodes generated using the second exemplary method are denoted SD'(*n,mₙ*), and are the same as those produced using the first exemplary method (Figures 11 and 12), except that the summary data structures *SUM* do not include carry-over count values *COⱼ*. The second exemplary method avoids the need for carry-over values and avoids using a summary buffer. Instead, the tree structure is searched (and/or added to) to find the lowest level n at which a detected signal is entirely encompassed by a summary node SD'(*n*,*mₙ*) period *Δt_{S}*(*n,mₙ*)*.* An auxiliary database AD is still used to store any signals which cannot be fitted into the nodes SD'(*n,mₙ*) at each level n (for example because they span a boundary between nodes at that level).

In the second exemplary method, each level of the summary database SD' tree structure includes one active summary node SD'(*n,mₙ*) corresponding to the current maximum value of index *mₙ*, and any number of closed summary nodes, SD'(*n,mₙ-1*), SD'(*n,mₙ-2*) and so forth. The active summary node SD'(*n,mₙ*) at each level n is the most recent. In the second exemplary method, the auxiliary database AD' takes the form of a separate interval structure *INT(n)* corresponding to each level n of the summary database SD'.

The second exemplary method of building the summary database follows detection of a signal (step **S2**) and determination of the signal data 14 (step **S4**) including the at least the signal start time *tₛₜₐᵣₜ,* the signal end time *t_{end},* and the values of the one or more signal properties *p₁*, *p₂*, *..., p_{P}.*

The signal data 14 is received (step **S84**). Starting from the lowest level *n=*0 (step **S85**), successively increasing levels n of the summary database SD' tree structure are searched. If the start *tₛₜₐᵣₜ* and end *t_{end}* time of the signal are within the summary node period *Δt_{S}*(*n*,*mₙ*) corresponding to the active summary node SD'(*n*,*mₙ*) at the searched level n (step **S86**|Yes), the signal property values *p₁*, *p₂*, *..., p_{P}* of the signal are added to the summary data structure *SUM* of the active summary node SD'(*n,mₙ*) at the searched level *n* (step **S87**).

If the start time *tₛₜₐᵣₜ* of the signal is within the summary node period *Δt_{S}*(*n,mₙ*) corresponding to the active summary node SD'(*n,mₙ*) at the searched level n and the end time *t_{end}* is outside the summary node period *Δt_{S}*(*n,mₙ*) (step **S86**|No followed by step **S88**|Yes), the active summary node SD'(*n,mₙ*) at the searched level n is closed (step **S92**). This may involve saving/storing the active summary node SD'(*n,mₙ*) to one or more storage devices 6 and/or marking it as read-only, but equally may not require specific action beyond carrying out the following stages (steps **S93** to **S95**). The summary data structure *SUM* of the summary node SD'(*n,mₙ*) is propagated to all higher level summary nodes SD'(*>n,mₙ*) from which the summary node SD'(*n,mₙ*) at the searched level n is a descendant (step **S93**). The propagation process may include adding new levels n and/or recursive propagation processes, and shall be explained further in relation to Figure 16 hereinafter. A new active summary node SD'(n, *mₙ+*1) is added (step **S94**), and the index *mₙ* incremented to *mₙ₊₁* (step **S95**) before returning to the initial test (step **S86**) to determine whether the signal can fit within the updated active summary node SD'(*n,mₙ*) (recalling that *mₙ* has been incremented by one).

If the end time *t_{end}* of the signal is within the summary node period *Δt_{S}*(*n,mₙ*) corresponding to the active summary node SD'(*n,mₙ*) at the searched level n and the start time *tₛₜₐᵣₜ* is outside the summary node period *Δt_{S}*(*n,mₙ*) (step **S86**|No followed by step **S88**|No), then the signal data 14 of the signal is added to the interval structure *INT(n)* corresponding to the searched level (step **S89**) and the searched level n is increased by one to n+1 (step **S90**). The interval structure *INT(n)* for each level n need not be a tree structure, and alternatively the interval structure *INT(n)* for each level n may have the same structure as the detailed database DD (and be built the same way).

If the start *tₛₜₐᵣₜ* and end *t_{end}* time of the signal are within the summary node period *Δt_{S}*(*n,mₙ*) corresponding to the active summary node SD'(*n,mₙ*) at the increased searched level n (step **S91**|Yes - recalling that n was incremented in the preceding step), the signal property values *p₁*, *p₂, ..., p_{P}* of the signal are added to the summary data structure *SUM* of the active summary node *SD'*(*n,mₙ*) at the incremented searched level n (step **S87**). If a first summary node SD(n,1) at the incremented level n does not exist, it is generated. However, if the start *tₛₜₐᵣₜ* and end *t_{end}* time of the signal still do not fit within the summary node period *Δt_{S}*(*n,mₙ*) corresponding to the active summary node SD'(*n,mₙ*) at the incremented searched level *n* (step **S91**|No), the process returns to the second test (step **S88**).

In this way, each level n is iteratively searched until the signal property values *p₁*, *p₂*, ..., *p_{P}* of the signal can be stored to the summary data structure *SUM* of a summary node SD'(*n,mₙ*) encompassing the signal start *tₛₜₐᵣₜ* and end *t_{end}* time. At each level below this the signal data 14 is stored to the respective interval structure *INT(n).*

Referring in particular to Figure 16 the propagation of summary node SD'(*n,mₙ*) data to higher levels shall be described.

The method of propagation may be carried out relative to any level *n*, and indeed is carried out at step **S100** of this method of Figure 16. In other words, the process of propagation of data in summary nodes SD'(*n,mₙ*) to higher levels *n* >0 may be recursive as needed.

Data is only propagated to the most recent summary node SD'(*n,mₙ*) at each level, with new nodes being added if necessary.

A command is received to propagate data of a node SD'(*n,mₙ*) to higher levels (step **S96**). For example, this is applied to the active summary node SD'(*n,mₙ*) at step **S93** in the second method shown in Figure 15, and to the data of a summary node SD'(*n+*1,*mₙ₊₁*) at step **S100** of the propagation method shown in Figure 16. The data to be propagated includes at least the summary data structure *SUM*, but may include further data in other examples.

It is tested whether the summary node time period *Δt_{S}*(*n,mₙ*) of the propagated node SD'(*n,mₙ*) fits wholly within summary node time period *Δt_{S}*(*n+1,mₙ₊₁*) of the most recent summary node SD'(*n+*1,*mₙ₊₁*) at the next level up *n*+1 (step **S97**). In other words, whether *tSₛₜₐᵣₜ*(*n+1,mₙ₊₁*) ≤ *tSₛₜₐᵣₜ*(*n,mₙ*) ≤ *tS_{end}*(*n+1,mₙ₊₁*) and *tSₛₜₐᵣₜ*(*n+1,mₙ₊₁*) ≤ *tS_{end}*(*n,mₙ*) ≤ *tS_{end}*(*n+1,mₙ₊₁*)*.* If a first summary node SD'(n+1,1) at the incremented level n+1 does not exist, it is generated.

If the summary node time period *Δt_{S}*(*n,mₙ*) of the propagated node SD'(*n,mₙ*) wholly fits (step **S97**|Yes), then the data from the propagated node SD'(*n,mₙ*) is added to the node SD'(*n+*1,*mₙ₊₁*) (step **S98**) and the process ends. In other words, the summary data structure *SUM* of propagated node SD'(*n,mₙ*) is added to the summary data structure *SUM* of node SD'(*n+*1*,mₙ₊₁*)*.* If the same unique set of signal properties *p₁*, *p₂*, ..., *p_{P}* exists in both, the entries are merged by combining the count values *Cⱼ*.

When the summary node time period *Δt_{S}*(*n,mₙ*) of the propagated node SD'(*n,mₙ*) does not wholly fit within the summary node time period *Δt_{S}*(*n+1,mₙ₊₁*) of the most recent summary node SD'(*n+*1,*mₙ₊₁*) at the next level up n+1 (step **S97**|No), the most recent summary node SD'(*n*+1, *m*_{*n+*1}) at level n+1 is closed (step **S99**). This may involve writing the summary node SD'(n+1, *m*_{*n+*1}) to a storage device 6 or flagging as read only, but in practice may not require doing anything specific beyond carrying out the following steps (**S100** to **S102**). The data in summary node SD'(n+1, *m*_{*n+*1}) is propagated to levels n + 2 and higher (step **S100**), which is in practice a command (step **S96**) to propagate node SD'(n+1, *m*_{*n+*1})*.* Once data has been propagated to levels *n* + 2 and higher (step **S100**), the most recent summary node SD'(*n+*1,*mₙ₊₁*) is shifted by adding the next summary node SD'(*n*+1,*mₙ₊₁*+1) (step S101) and incrementing the index *mₙ₊₁* → *mₙ₊₁+*1 (step S102) before returning to the initial test (step S97).

Alternatively, any other suitable method for propagating the summary data structures *SUM* to higher levels n may be used (provided that it does not result in double counting).

Referring also to Figures 17A to 17C, a worked example of applying the second exemplary method of building the summary database SD will be explained. Figure 17A reproduces Figures 6A and 13A for convenience in comparing Figures 17B and 17C. Figure 17B schematically illustrates the tree structure of the summary database SD generated for the signals shown in Figure 17A using the second exemplary method, and Figure 17C schematically illustrates the auxiliary database of the summary database SD generated for the signals shown in Figure 17A using the second exemplary method.

In Figures 13B and 13C, the notation S_{4,5,6} denotes for brevity the signals S₄, S₅ and S₆. Similarly, S_{6,8} denoted signals S₆ and S₈, and so forth.

Initially, only one summary leaf node SD'(0,1) exists. At time *t₁* = *τ₁*, the first signal S₁ ends. The index *mₒ* = 1 and signal S₁ is wholly within the period *Δt_{S}*(0,1) (step **S86**|Yes), so the signal properties *p₁*, *p₂*, *..., p_{P}* of signal S₁ are added to the summary data structure *SUM* of leaf summary node S(0,1) (step **S87**).

The second signal S₂ does not wholly fit in SD'(0,1) and ends after it (step **S861**|No followed by step **88|**Yes), the data is propagated (step **S93**), in the process generating level *n*=1 node SD'(1,1), and the next summary leaf node SD'(0,2) is generated (step S94). The second signal S₂ also does not wholly fit in SD'(0,2) (step **S86**|No followed by step **88**|Yes), and so the signal is added to the interval structure *INT*(0) (step **S89)** and the n=1level is searched (step **S90**). With *n*=1, it is found that the signal S₂ first within node SD'(1,1) (step **S91**|Yes) and the signal properties *p₁*, *p₂*, *..., p_{P}* of signal S₂ are added to the summary data structure *SUM* of summary node SD'(1,1) (step **S87**).

The process continues in this way through signals S₃ to S₁₁. Referring in particular to Figures 17B and 17C, it may be observed that whilst many signals may need to be stored to the interval structure *INT*(0) at the lowest level *n*=0, the number of signals quickly drops with increasing level n. Compared to the auxiliary database AD of the first exemplary method, the approach of the second exemplary method means that at longer query time periods *Δt_{Q}*, which will generally be processed at higher query levels *n_{Q}*, the additional complexity of searching the auxiliary database AD may be reduced or even avoided.

### Second method of querying the summary database

Referring also to Figure 18, a process flow diagram is shown for a method of processing a query using a summary database SD' corresponding to the summary database SD' produced using the method of Figures 15 and 16.

When processing the query using the summary database SD' (i.e. following step **S11**|Yes in Figure 5), the query processing level *n_{Q}* of the summary database SD' tree structure is determined based on the query time period *Δt_{Q}* (step **S104**). This is the same as the corresponding step S53 shown in Figure 14.

For each summary node SD'(*n_{Q}*,*m_{nQ}*) at the query processing level *n_{Q}* having a summary node period *Δt_{S}*(*n_{Q},mₙ*) overlapping the query time period *Δt_{Q}*, any entry in the corresponding summary data structure *SUM* which matches the query fields, *tₛₜₐᵣₜ*, *t_{end}*, and any specified ranges *Δp₁*, *Δp₂*, ..., *Δp_{P},* is added to the summary query result *qSᵣₑₛ* (step **S105**). This is the same as the corresponding step **S54** shown in Figure 14. The summary query result *qSᵣₑₛ* is structured in the same way as described in relation to Figure 14, and may be used in the same way(s).

After pulling relevant data from the summary nodes SD'(*n_{Q}*,*m_{nQ}*), the auxiliary database AD is then also searched to find any signal data i14 stored therein and matching the query fields (step **S106**). Unlike the corresponding step **S55** shown in Figure 14, only the interval structure *INT*(*n_{Q}*) at the search level *n_{Q}* needs to be searched. Any matches are processed to add the signal data to the summary query result *qSᵣₑₛ.*

The summary query result *qSᵣₑₛ* is output (step **S107**) for display/storage etc (step **S14**). This is the same as the corresponding step **S56** shown in Figure 14.

### Third method of storage to the summary database

Referring also to Figures 19 to 21, a third exemplary method of building the summary database SD is illustrated.

Figure 19 schematically illustrates a summary node SD*(*n,mₙ*) used in the third exemplary method. The summary node SD*(*n,mₙ*) is the same as the summary node SD(*n,mₙ*) shown in Figure 10, except that the summary data structure *SUM* does not include carry-over count values *COⱼ*, and that the summary node SD*(*n,mₙ*) also includes a propagation list 15, for example in the form of signal data 14₁, 14₂, ..., 14_{J} for a number J of signals (further explained hereinafter).

Figure 20 shows a process flow diagram of the third exemplary method of building the summary database SD, and Figure 21 shows a process flow diagram for a method of propagating data to higher levels n within the tree structure (used at step **S65** in Figure 20).

In the third exemplary method, each level of the summary database SD* tree structure includes one active summary node SD*(*n,mₙ*) corresponding to the current maximum value of index *mₙ*, and any number of closed summary nodes, SD*(*n,mₙ₋₁*)*,* SD*(*n,mₙ-2*) and so forth. The active summary node SD*(*n,mₙ*) at each level n is the most recent. In the third exemplary method, the auxiliary database AD* takes the form of a separate interval structure *INT(n)* corresponding to each level n of the summary database SD*, in the same way as for the summary database SD' built using the second method.

The third exemplary method of building the summary database follows detection of a signal (step **S2**) and determination of the signal data 14 (step **S4**) including the at least the signal start time *tₛₜₐᵣₜ*, the signal end time *t_{end}*, and the values of the one or more signal properties *p₁, p₂, ..., p_{P}.* The third exemplary method, like the second, avoids use of a summary buffer, but unlike the second keeps the processing focused on the leaf level n = 0 until propagation of data to higher levels *n* > o is needed. In some signal environments, in particular if a relatively larger number of signals require propagation to higher levels n, the third exemplary method avoids the need to frequently switch addressed memory locations compared to the second exemplary method. In such environments, the third exemplary method may have superior efficiency.

The signal data 14 is received (step **S58**), and it is tested whether or not the signal start *tₛₜₐᵣₜ* and end *t_{end}* of the signal are wholly within the leaf summary node period *Δt_{S}*(*n,mₙ*) of the active leaf summary node SD*(0,*mₒ*) (step **S59**). If it is (step **S59**|Yes), then the signal property values *p₁*, *p₂, ..., p_{P}* of the signal are added to the summary data structure *SUM* of the active leaf summary node SD*(*0*,*mₒ*) (step **S60**) and the processing returns to the next signal or buffer *BuffR* (step **S7** in Figure 2).

However, if the signal start *tₛₜₐᵣₜ* and end *t_{end}* of the signal are not wholly within the leaf summary node period *Δt_{S}*(*n*,*mₙ*) of the active leaf summary node SD*(0,*mₒ*) (step **S59**|No), it is tested whether the end time *t_{end}* of the signal is after the end *tS_{end}*(0*,mₒ*) of the active leaf summary node SD*(0,*mₒ*) (step **S61**). If it does not (step **S61**|No), i.e. if the start time *tₛₜₐᵣₜ* is before the summary node period *Δt_{S}*(*n,mₙ*) of the active leaf summary node SD*(0,*mₒ*), then the signal data 14 of the signal is added to the interval structure *INT(n)* corresponding to leaf n = 0 (step **S62**) and the signal data 14 of the signal is also added to the propagation list 15 of the active leaf summary node SD*(0,*mₒ*) (step **S63**).

Alternatively, if the signal start *tₛₜₐᵣₜ* and end *t_{end}* of the signal are not wholly within the leaf summary node period *Δt_{S}*(*n,mₙ*) of the active leaf summary node SD*(0,*mₒ*) (step **S59**|No), and the end time *t_{end}* of the signal is after the end *tS_{end}*(0*,mₒ*) of the active leaf summary node SD*(0,*mₒ*) (step **S61**|**Yes**), then the active leaf summary node SD*(*0*,*mₒ*) is closed (step **S64**). This may involve saving/storing the active leaf summary node *SD**(*n,mₙ*) to one or more storage devices 6 and/or marking it as read-only, but equally may not require specific action beyond carrying out the following stages (steps **S65** to **S67**). The summary data structure *SUM* of the leaf summary node SD*(*0*,*mₒ*) is propagated to all higher level summary nodes *SD**(*n>0,mₙ*) from which the leaf summary node SD*(*0*,*mₒ*) is a descendant (step **S65**). The propagation process may include adding new levels n and/or recursive propagation processes, and shall be explained further in relation to Figure 21 hereinafter. A new active leaf summary node SD*(0, *mₒ+*1) is added (step **S66**), and the index *mₒ* incremented to *mₒ+1* (step **S67**) before returning to the initial test (step **S59**) to determine whether the signal can fit within the updated active leaf summary node SD*(*0*,*mₒ*) (recalling that *mₒ* has been incremented by one).

Referring in particular to Figure 21 the propagation of summary node SD*(*n,mₙ*) data to higher levels shall be described.

The method of propagation may be carried out relative to any level n, and indeed is carried out at step **S73** of this method of Figure 21. In other words, the process of propagation of data in summary nodes SD*(*n,mₙ*) to higher levels n >0 may be recursive as needed.

Data is only propagated to the most recent summary node SD*(*n,mₙ*) at each level n, with that node being added if necessary.

A command is received to propagate data of a node SD*(*n,mₙ*) to higher levels (step S68). For example, this is applied to the active leaf summary node SD*(0,*mₒ*) at step S65 in the third method shown in Figure 20, and to the data of a summary node SD*(*n+1,mₙ₊₁*) at step S73 of the propagation method shown in Figure 21. The data to be propagated includes at least the summary data structure *SUM,* but may include further data in other examples.

It is tested whether the summary node time period *Δt_{S}*(*n,mₙ*) of the propagated node SD*(*n,mₙ*) fits wholly within summary node time period Δt_{S}(*n+1,mₙ₊₁*) of the most recent summary node SD*(*n+*1,*mₙ₊₁*) at the next level up n+1 (step **S69**). In other words, whether *tSₛₜₐᵣₜ*(*n+1,mₙ₊₁*) ≤ *tSₛₜₐᵣₜ*(*n,mₙ*) ≤ *tS_{end}*(*n+1,mₙ₊₁*) and *tSₛₜₐᵣₜ*(*n+1,mₙ₊₁*) ≤ *tS_{end}*(*n,mₙ*) ≤ *tS_{end}*(*n+1,mₙ₊₁*)*.* If a first summary node SD*(n+1,1) at the increased level n+1 does not exist, it is generated.

If the summary node time period *Δt_{S}*(*n,mₙ*) of the propagated node SD*(*n,mₙ*) wholly fits (step **S69**|Yes), then the data from the propagated node SD*(*n,mₙ*) is added to the node SD*(*n+1,mₙ₊₁*) (step **S70**). In other words, the summary data structure *SUM* of propagated node SD***(*n,mₙ*) is added to the summary data structure *SUM* of node SD*(*n*+*1*,*m*_{*n+*1}). The propagation list 15 of the propagated node SD*(*n*,*mₙ*) is then accessed (step **S71**) and processed (steps **S76** though **S82**) as described hereinafter.

However, if the summary node time period *Δt_{S}*(*n,mₙ*) of the propagated node SD*(*n,mₙ*) does not wholly fit within the summary node time period *Δt_{S}*(*n+1,mₙ₊₁*) of the most recent summary node SD*(*n+*1,*mₙ₊₁*) at the next level up n+1 (step **S69|**No), the most recent summary node SD*(*n*+1, *mₙ₊₁*) at level *n*+1 is closed (step **S72**). This may involve writing the summary node SD*(n+1, *mₙ₊₁*) to a storage device 6 or flagging as read only, but in practice may not require doing anything specific beyond carrying out the following steps **(S73** to **S74).** The data in summary node SD*(n+1, *mₙ₊₁*) is propagated to levels n + 2 and higher (step **S73**), which is in practice a command (step **S68)** to propagate node SD*(*n*+1, *mₙ₊₁*)*.* Once data has been propagated to levels n + 2 and higher (step **S73**), the most recent summary node SD*(*n*+₁,mₙ₊₁) is shifted by adding the next summary node SD*(*n*+1,*mₙ₊₁*+1) (step **S74**) and incrementing the index *mₙ₊₁* → *mₙ₊₁+*1 (step **S75)** before returning to the initial test (step **S69**).

Returning to the processing of the propagation list 15 of a propagated node SD*(*n,mₙ*) (steps **S76** though **S82**), if a propagation list 15 contains an integer number *J* ≥ 0 of signal data 14₁, 14₂, ..., 14ⱼ, ..., 14_{J}, then starting with the first *j*=1 (step **S76**), it is checked whether the signal corresponding to signal data 14ⱼ fits wholly within the summary node time period *Δt_{S}*(*n+*1,*mₙ₊₁*) of the most recent summary node SD*(*n*+1,*m*_{*n*+1}) at level *n*+1 (step **S77**). This amounts to checking, for the signal corresponding to signal data 14ⱼ, whether *tSₛₜₐᵣₜ*(*n+*1,*mₙ₊₁*) ≤ *tₛₜₐᵣₜ* and *t_{end}* ≤ *tS_{end}*(*n+*1,*mₙ₊₁*)*.* If it does (step **S77**|Yes), the signal properties *p₁*, *p₂, ..., p_{P}* of the signal data 14ⱼ are added to the summary data structure *SUM* of the active summary node SD*(*n+1,mₙ₊₁*) (step **S78**).

However, if the signal corresponding to signal data 14ⱼ does not fit wholly within the summary node time period *Δt_{S}*(*n+*1,*mₙ₊₁*) of the most recent summary node SD*(*n*+1,mₙ₊₁) at level *n*+1 (step **S77**|No), then the signal data 14ⱼ of that signal is added to the interval structure *INT*(*n+1*) of the level *n* +1 (step **S79**) and the signal data 14ⱼ of that signal is also added to the propagation list 15 of the summary node SD*(*n+*1,*mₙ₊₁*) (step **S80**).

If there are further signal data 14ⱼ to process (step **S81**|No), then the index j is incremented to *j*+1 and the processing repeated (steps **S77** to **S81**).

Alternatively, any other suitable method for propagating the summary data structures *SUM* to higher levels n may be used (provided that it does not result in double counting).

In this way, signal data 14 of signals which cannot fit into the summary nodes SD*(*n,mₙ*) are any level *n* are stored in the propagations lists 15, and then subsequently added to the summary nodes SD*(*n,mₙ*) at the first level n where they fit in the corresponding summary node time period *Δt_{S}*(*n+*1,*mₙ₊₁*) during the process of propagating data to higher levels.

The summary databases SD* produced by the third exemplary method have the same structure as a summary database SD' produced by the second exemplary method, aside from the addition of propagation lists 15. Thus, a worked example similar to Figures 17A to 17C is not repeated. Searching a summary databases SD* produced by the third exemplary method have the same structure as a summary database SD' produced by the second exemplary method, and so the searching process may be the same as described in relation to Figure 18.

In some examples, the apparatus 3 may omit the communications interface 7, for example when only a local client 10 is required.

## Claims

1. A method comprising:
receiving (S1) a time series of radio data (E(t));
for each of a plurality of buffer periods, at the end of a most recently elapsed buffer period, analysing the radio data of that buffer period to detect signals (S2);
in response to detecting one or more signals ending within that buffer period (S4):
determining a start time and an end time of that signal, and one or more signal properties (p₁, ..., p_{P}) corresponding to that signal, the signal properties including at least a duration;
storing (S5) that signal to a detailed database (DD) and a summary database (SD);
wherein the detailed database comprises a plurality of levels, each level comprising one or more detailed nodes, the detailed nodes within each level subdividing time into consecutive detailed node periods, wherein storing a signal to the detailed database comprises storing the signal properties corresponding to that signal into the lowest level available detailed node corresponding to a detailed node time period encompassing the start time and end time of that signal;
wherein the summary database comprises an auxiliary database (AD) and a tree-structure of summary nodes having a plurality of levels, wherein the summary nodes at each level correspond to consecutive summary node periods of equal length, each summary node storing a summary data structure which stores, for each unique combination of quantised signal property values, a count of the number of signals corresponding to the respective summary node period which have that unique combination of quantised signal property values;
wherein storing a signal to the summary database comprises, at each level of the summary database:
updating, based on the signal properties, the summary data structures of one or more summary nodes having summary node periods overlapping the duration of that signal; or
storing the signal properties corresponding to that signal in the auxiliary database.

2. The method of claim 1, wherein the time series of radio data (E(t)) is received (S1) and stored in real time, wherein the detection of signals (S2) and storage (S5) of detected signals to the detailed database (DD) and summary database (SD) occurs at the end of each buffer period without interrupting the reception and storage of the time series of radio data.

3. The method of claims 1 or 2, wherein the signal properties (p₁, ..., p_{P}) further include one of more of:
a minimum frequency;
a maximum frequency;
a signal bandwidth;
a centre frequency; and/or
an integrated signal power.

4. The method of any one of claims 1 to 3, wherein each detailed node stores up to a threshold number of signals;
optionally wherein the threshold number of signals for each detailed node depends on the corresponding level of that detailed node.

5. The method of claim 4, wherein each level of the detailed database (DD) comprises one active detailed node having a node start time, and any number of closed detailed nodes, each having a node start time and a node end time defining the corresponding detailed node period;
wherein storing (S5) a signal to the detailed database comprises:
starting from the lowest level of the detailed database, searching successively increasing levels of the detailed database until an active detailed node at the searched level has a node start time before the start time of that signal, and in response:
storing that signal to the active detailed node at the searched level; and
in response to the active detailed node at the searched level is now storing a number of signals equal to the corresponding threshold number of signals:
closing the active detailed node at the searched level, assigning the end time of that signal as the node end time; and
opening a new active detailed node at the searched level, assigning the end time of that signal as the node start time.

6. The method of any one of claims 1 to 5, wherein storing (S5) a signal to the detailed database (DD) further comprises storing the corresponding time series of radio data to the same detailed node as the signal properties.

7. The method of any one of claims 1 to 6, wherein the summary database (SD) comprises, at the lowest level, up to a number *N_{b}* of active leaf summary nodes corresponding to a summary buffer period, and any number of closed leaf summary nodes corresponding to earlier summary node periods;
wherein storing a signal to the summary database comprises:
a. in response to the start and end time of that signal are wholly within the summary buffer period, updating, based on the signal property values of that signal, the summary data structures of every active leaf summary node having a summary node period overlapping the duration of that signal;
b. in response to the end time of that signal is within the summary buffer period and the start time of that signal is before the summary buffer period, storing the signal properties (p₁, ..., p_{P}) corresponding to the signal into the auxiliary database (AD);
c. in response to the end time of that signal is after the summary buffer period:
closing the oldest active leaf summary node and propagating the corresponding summary data structure to all higher level summary nodes from which the oldest active leaf summary node is a descendant, wherein each summary node only counts that signal once in the respective summary data structure;
opening a new active leaf summary node as the most recent active leaf summary node in the summary buffer period;
d. wherein steps a. to c. are iterated until either:
the signal property values of the signal are added to every active leaf summary node having a summary node period overlapping the duration of that signal; or
the signal properties corresponding to that signal are stored into the auxiliary database.

8. The method of any one of claims 1 to 6, wherein each level of the summary database (SD) comprises one active summary node having a node start time, and any number of closed detailed nodes, wherein the active summary node is the most recent, each summary node having a node start time and a node end time defining the corresponding summary node period;
wherein the auxiliary database (AD) comprises an interval structure corresponding to each level of the summary database;
wherein storing a signal to the summary database comprises, starting from the lowest level, searching successively increasing levels of the summary database, at each level:
e. in response to the start and end time of that signal are within the summary node period corresponding to the active summary node at the searched level, adding the signal property (p₁, ..., p_{P}) values of that signal to the summary data structure of the active summary node at the searched level;
f. in response to the start time of that signal is within the summary node period corresponding to the active summary node at the searched level and the end time is outside the summary node period:
closing the active summary node at the searched level and propagating the corresponding summary data structure to all higher level summary nodes from which the active summary node at the searched level is a descendant;
opening a new active summary node at the searched level and returning to step e.;
g. in response to the end time of the signal is within the summary node period corresponding to the active summary node at the searched level and the start time is outside the summary node period:
adding the signal data (14) to the interval structure corresponding to the searched level; and
increasing the searched level by one.

9. The method of any one of claims 1 to 6, wherein each level of the summary database (SD) comprises one active summary node having a node start time, and any number of closed detailed nodes, wherein the active summary node is the most recent, each summary node having a node start time and a node end time defining the corresponding summary node period;
wherein the auxiliary database (AD) comprises an interval structure corresponding to each level of the summary database;
wherein storing a signal to the summary database comprises:
h. in response to the start and end time of that signal are within the summary node period corresponding to the active leaf summary node, adding the signal property (p₁, *...,* p_{P}) values of the signal to the summary data structure of the active leaf summary node;
i. in response to the start time of that signal is within the summary node period corresponding to the active summary node at the searched level and the end time is outside the summary node period:
closing the active recent leaf summary node and propagating the corresponding summary data structure to all higher level summary nodes from which the active leaf summary node is a descendant;
opening a new active leaf summary node and returning to step h.;
j. in response to the end time of the signal is within the summary node period corresponding to the active summary node at the searched level and the start time is outside the summary node period:
adding the signal data (14) to the interval structure corresponding to the leaf level; and
adding the signal data to a propagation list stored in the active leaf summary node.

10. The method of claim 9, wherein propagating the corresponding summary data structure to all higher level summary nodes from which the active leaf summary node is a descendant comprises, at each level:
in response to receiving a propagation list from the descendant level, for each signal stored in the propagation list:
if the start and end time of that signal are within the summary node period of the active summary node at that level, adding the signal property values of that signal to the corresponding summary data structure; or
otherwise, adding that signal to the propagation list of the active summary node at that level and to the interval corresponding to that level.

11. The method of any one of claims 1 to 10, wherein each summary node and each detailed node is read only once the current time is after the corresponding respective node period.

12. The method of any one of claims 1 to 11, the method further comprising:
receiving a query comprising query fields, the query fields comprising a query start time, a query end time and one or more ranges of signal properties;
in response to meeting a condition based on the query fields, processing the query using the summary nodes of the summary database (SD);
otherwise, processing the query using the detailed nodes of the detailed database (DD).

13. A method of querying a detailed database (DD) and summary database (SD) generated using the method of any one of claims 1 to 12, the method comprising:
receiving a query comprising query fields, the query fields comprising a query start time, a query end time and one or more ranges of signal properties, wherein the difference between the query start time and the query end time is a query time period;
in response to meeting a condition based on the query fields, processing the query using the summary database;
otherwise, processing the query using the detailed database.

14. The method of claim 13, wherein processing the query using the detailed database (DD) comprises:
starting from the lowest level of the detailed database, searching successively increasing levels of the detailed database and adding to a detailed query result each signal which matches all the query fields;
outputting the detailed query result;
and/or wherein processing the query using the summary database (SD) comprises:
determining, based on the query time period, a query processing level of the summary database;
for each summary node at the query processing level having a summary node period overlapping the query time period, adding any entry in the corresponding summary data structure which matches the query fields to a summary query result;
searching the auxiliary database (AD) and adding any signal matching the query fields to the summary query result;
outputting the summary query result.

15. Apparatus (1) configured:
to receive (S1) a time series of radio data (E(t));
for each of a plurality of buffer periods, at the end of a most recently elapsed buffer period, to analyse the radio data of that buffer period to detect signals (S2);
in response to detecting one or more signals ending within that buffer period (S4):
to determine a start time and an end time of that signal, and one or more signal properties (p₁, ..., p_{P}) corresponding to that signal, the signal properties including at least a duration;
to store (S5) that signal to a detailed database (DD) and a summary database (SD);
wherein the detailed database comprises a plurality of levels, each level comprising one or more detailed nodes, the detailed nodes within each level subdividing time into consecutive detailed node periods, wherein storing a signal to the detailed database comprises storing the signal properties corresponding to that signal into the lowest level available detailed node corresponding to a detailed node period encompassing the start time and end time of that signal;
wherein the summary database comprises an auxiliary database (AD) and a tree-structure of summary nodes having a plurality of levels, wherein the summary nodes at each level correspond to consecutive summary node periods of equal length, each summary node storing a summary data structure which stores, for each unique combination of quantised signal property values, a count of the number of signals corresponding to the respective summary node period which have that unique combination of quantised signal property values;
wherein storing a signal to the summary database comprises, at each level of the summary database:
updating, based on the signal properties, the summary data structures of one or more summary nodes having summary node periods overlapping the duration of that signal; or
storing the signal properties corresponding to that signal in the auxiliary database.

## Patentansprüche

1. Verfahren, das Folgendes umfasst:
Empfangen (S1) einer Zeitreihe von Funkdaten (E(t));
für jede von mehreren Pufferperioden, am Ende einer zuletzt verstrichenen Pufferperiode, Analysieren der Funkdaten dieser Pufferperiode, um Signale zu detektieren (S2);
als Reaktion auf das Detektieren eines oder mehrerer Signale, die innerhalb dieser Pufferperiode enden (S4):
Bestimmen einer Startzeit und einer Endzeit dieses Signals und einer oder mehrerer Signaleigenschaften (p₁, ..., p_{P}), die diesem Signal entsprechen, wobei die Signaleigenschaften mindestens eine Dauer beinhalten;
Speichern (S5) dieses Signals in einer detaillierten Datenbank (DD) und einer Zusammenfassungsdatenbank (SD); wobei die detaillierte Datenbank mehrere Ebenen umfasst, wobei jede Ebene einen oder mehrere detaillierte Knoten umfasst, wobei die detaillierten Knoten innerhalb jeder Ebene die Zeit in aufeinanderfolgende Perioden detaillierter Knoten unterteilen, wobei das Speichern eines Signals in der detaillierten Datenbank Speichern der diesem Signal entsprechenden Signaleigenschaften in den detaillierten Knoten der niedrigsten verfügbaren Ebene, der einem die Startzeit und Endzeit dieses Signals einschließenden Zeitraum eines detaillierten Knotens entspricht, umfasst;
wobei die Zusammenfassungsdatenbank eine Hilfsdatenbank (AD) und eine Baumstruktur von Zusammenfassungsknoten mit mehreren Ebenen umfasst, wobei die Zusammenfassungsknoten auf jeder Ebene aufeinanderfolgenden Zusammenfassungsknotenperioden gleicher Länge entsprechen, wobei jeder Zusammenfassungsknoten eine Zusammenfassungsdatenstruktur speichert, die für jede eindeutige Kombination quantisierter Signaleigenschaftswerte einen Zählwert der Anzahl von der jeweiligen Zusammenfassungsknotenperiode entsprechenden Signalen speichert, die diese eindeutige Kombination quantisierter Signaleigenschaftswerte aufweisen;
wobei das Speichern eines Signals in der Zusammenfassungsdatenbank auf jeder Ebene der Zusammenfassungsdatenbank Folgendes umfasst:
Aktualisieren, basierend auf den Signaleigenschaften, der Zusammenfassungsdatenstrukturen eines oder mehrerer Zusammenfassungsknoten, deren Zusammenfassungsknotenperioden sich mit der Dauer dieses Signals überschneiden; oder
Speichern der Signaleigenschaften, die diesem Signal entsprechen, in der Hilfsdatenbank.

2. Verfahren nach Anspruch 1, wobei die Zeitreihe von Funkdaten (E(t)) empfangen (S1) und in Echtzeit gespeichert wird, wobei die Detektion von Signalen (S2) und Speicherung (S5) von detektierten Signalen in der detaillierten Datenbank (DD) und der Zusammenfassungsdatenbank (SD) am Ende jeder Pufferperiode ohne Unterbrechung des Empfangs und der Speicherung der Zeitreihe von Funkdaten erfolgt.

3. Verfahren nach Anspruch 1 oder 2, wobei die Signaleigenschaften (p₁, ..., p_{P}) ferner eines oder mehrere der Folgenden beinhalten:
eine minimale Frequenz;
eine maximale Frequenz;
eine Signalbandbreite;
eine Mittenfrequenz; und/oder
eine integrierte Signalleistung.

4. Verfahren nach einem der Ansprüche 1 bis 3, wobei jeder detaillierte Knoten bis zu einer Schwellenanzahl von Signalen speichert;
wobei optional die Schwellenzahl von Signalen für jeden detaillierten Knoten von der entsprechenden Ebene dieses detaillierten Knotens abhängt.

5. Verfahren nach Anspruch 4, wobei jede Ebene der detaillierten Datenbank (DD) einen aktiven detaillierten Knoten mit einer Knotenstartzeit und eine beliebige Anzahl geschlossener detaillierter Knoten umfasst, die jeweils eine Knotenstartzeit und eine Knotenendzeit aufweisen, die die entsprechende Periode des detaillierten Knotens definieren;
wobei das Speichern (S5) eines Signals in der detaillierten Datenbank Folgendes umfasst:
ausgehend von der niedrigsten Ebene der detaillierten Datenbank, Durchsuchen zunehmend höhere Ebenen der detaillierten Datenbank, bis ein aktiver detaillierter Knoten auf der durchsuchten Ebene eine Knotenstartzeit vor der Startzeit dieses Signals aufweist, und als Reaktion darauf:
Speichern dieses Signals in dem aktiven detaillierten Knoten auf der durchsuchten Ebene; und
als Reaktion darauf, dass der aktive detaillierten Knoten auf der durchsuchten Ebene nun eine Anzahl von Signalen speichert, die gleich der entsprechenden Schwellenanzahl von Signalen ist:
Schließen des aktiven detaillierten Knotens auf der durchsuchten Ebene, wobei die Endzeit dieses Signals als Knotenendzeit festgelegt wird; und
Öffnen eines neuen aktiven detaillierten Knotens auf der durchsuchten Ebene, wobei die Endzeit dieses Signals als Knotenstartzeit festgelegt wird.

6. Verfahren nach einem der Ansprüche 1 bis 5, wobei das Speichern (S5) eines Signals in der detaillierten Datenbank (DD) ferner Speichern der entsprechenden Zeitreihe von Funkdaten in demselben detaillierten Knoten wie die Signaleigenschaften umfasst.

7. Verfahren nach einem der Ansprüche 1 bis 6, wobei die Zusammenfassungsdatenbank (SD) auf der niedrigsten Ebene bis zu einer Anzahl von N_{b} aktiven Blattzusammenfassungsknoten, die einer Zusammenfassungspufferperiode entsprechen, und eine beliebige Anzahl von geschlossenen Blattzusammenfassungsknoten, die früheren Zusammenfassungsknotenperioden entsprechen, umfasst;
wobei das Speichern eines Signals in der Zusammenfassungsdatenbank Folgendes umfasst:
a. als Reaktion darauf, dass die Start- und Endzeit dieses Signals vollständig innerhalb der Zusammenfassungspufferperiode liegen, Aktualisieren, basierend auf den Signaleigenschaftswerten dieses Signals, der Zusammenfassungsdatenstrukturen jedes aktiven Blattzusammenfassungsknotens mit einer Zusammenfassungsknotenperiode, die sich mit der Dauer dieses Signals überschneidet;
b. als Reaktion darauf, dass die Endzeit dieses Signals innerhalb der Zusammenfassungspufferperiode liegt und die Startzeit dieses Signals vor der Zusammenfassungspufferperiode liegt, Speichern der dem Signal entsprechenden Signaleigenschaften (p₁ , ..., p_{P}) in der Hilfsdatenbank (AD);
c. als Reaktion auf die Endzeit dieses Signals nach der Zusammenfassungspufferperiode:
Schließen des ältesten aktiven Blattzusammenfassungsknotens und Propagieren der entsprechenden Zusammenfassungsdatenstruktur zu allen Zusammenfassungsknoten höherer Ebene, von denen der älteste aktive Zusammenfassungsknoten ein Abkömmling ist, wobei jeder Zusammenfassungsknoten dieses Signal nur einmal in der jeweiligen Zusammenfassungsdatenstruktur zählt;
Öffnen eines neuen aktiven Blattzusammenfassungsknotens als den jüngsten Blattzusammenfassungsknoten in der Zusammenfassungspufferperiode;
d. wobei die Schritte a. bis c. wiederholt werden, bis entweder:
die Signaleigenschaftswerte des Signals zu jedem aktiven Blattzusammenfassungsknoten hinzugefügt werden, dessen Zusammenfassungsknotenperiode sich mit der Dauer des Signals überschneidet; oder
die Signaleigenschaften, die diesem Signal entsprechen, in der Hilfsdatenbank gespeichert werden.

8. Verfahren nach einem der Ansprüche 1 bis 6, wobei jede Ebene der Zusammenfassungsdatenbank (SD) einen aktiven Zusammenfassungsknoten mit einer Knotenstartzeit und eine beliebigen Anzahl geschlossener detaillierter Knoten umfasst, wobei der aktive Zusammenfassungsknoten der jüngste ist, wobei jeder Zusammenfassungsknoten eine Knotenstartzeit und eine Knotenendzeit aufweist, die die entsprechende Zusammenfassungsknotenperiode definieren; wobei die Hilfsdatenbank (AD) eine jeder Ebene der Zusammenfassungsdatenbank entsprechende Intervallstruktur aufweist;
wobei das Speichern eines Signals in der Zusammenfassungsdatenbank, ausgehend von der niedrigsten Ebene und zunehmend höhere Ebenen der Zusammenfassungsdatenbank durchsuchend, auf jeder Ebene Folgendes umfasst:
e. als Reaktion darauf, dass die Start- und Endzeit dieses Signals innerhalb der dem aktiven Zusammenfassungsknoten auf der durchsuchten Ebene entsprechenden Zusammenfassungsknotenperiode liegen, Hinzufügen der Werte der Signaleigenschaften (p₁, ..., p_{P}) dieses Signals zu der Zusammenfassungsdatenstruktur des aktiven Zusammenfassungsknotens auf der durchsuchten Ebene;
f. als Reaktion darauf, dass die Startzeit dieses Signals innerhalb der dem aktiven Zusammenfassungsknoten auf der durchsuchten Ebene entsprechenden Zusammenfassungsknotenperiode liegt und die Endzeit außerhalb der Zusammenfassungsknotenperiode liegt:
Schließen des aktiven Zusammenfassungsknotens auf der durchsuchten Ebene und Propagieren der entsprechenden Zusammenfassungsdatenstruktur zu allen Zusammenfassungsknoten höherer Ebene, von denen der aktive Zusammenfassungsknoten auf der durchsuchten Ebene ein Abkömmling ist;
Öffnen eines neuen aktiven Zusammenfassungsknotens auf der durchsuchten Ebene und Rückkehr zu Schritt e.;
g. als Reaktion darauf, dass die Endzeit des Signals innerhalb der dem aktiven Zusammenfassungsknoten auf der durchsuchten Ebene entsprechenden Zusammenfassungsknotenperiode liegt und die Startzeit außerhalb der Zusammenfassungsknotenperiode liegt:
Hinzufügen der Signaldaten (14) zu der Intervallstruktur, die der durchsuchten Ebene entspricht; und
Erhöhen der durchsuchte Ebene um eins.

9. Verfahren nach einem der Ansprüche 1 bis 6, wobei jede Ebene der Zusammenfassungsdatenbank (SD) einen aktiven Zusammenfassungsknoten mit einer Knotenstartzeit und eine beliebigen Anzahl geschlossener detaillierter Knoten umfasst, wobei der aktive Zusammenfassungsknoten der jüngste ist, wobei jeder Zusammenfassungsknoten eine Knotenstartzeit und eine Knotenendzeit aufweist, die die entsprechende Zusammenfassungsknotenperiode definieren; wobei die Hilfsdatenbank (AD) eine jeder Ebene der Zusammenfassungsdatenbank entsprechende Intervallstruktur aufweist;
wobei das Speichern eines Signals in der Zusammenfassungsdatenbank Folgendes umfasst:
h. als Reaktion darauf, dass die Start- und Endzeit dieses Signals innerhalb der dem aktiven Blattzusammenfassungsknoten entsprechenden Zusammenfassungsknotenperiode liegen, Hinzufügen der Werte der Signaleigenschaften (p₁, ..., p_{P}) des Signals zu der Zusammenfassungsdatenstruktur des aktiven Blattzusammenfassungsknoten;
i. als Reaktion darauf, dass die Startzeit dieses Signals innerhalb der dem aktiven Zusammenfassungsknoten auf der durchsuchten Ebene entsprechenden Zusammenfassungsknotenperiode liegt und die Endzeit außerhalb der Zusammenfassungsknotenperiode liegt:
Schließen des aktiven aktuellen Blattzusammenfassungsknotens und Propagieren der entsprechenden Zusammenfassungsdatenstruktur zu allen Zusammenfassungsknoten höherer Ebene, von denen der aktive Blattzusammenfassungsknoten ein Abkömmling ist;
Öffnen eines neuen aktiven Blattzusammenfassungsknotens und Rückkehr zu Schritt h.;
j. als Reaktion darauf, dass die Endzeit des Signals innerhalb der dem aktiven Zusammenfassungsknoten auf der durchsuchten Ebene entsprechenden Zusammenfassungsknotenperiode liegt und die Startzeit außerhalb der Zusammenfassungsknotenperiode liegt:
Hinzufügen der Signaldaten (14) zu der Intervallstruktur, die der Blattebene entspricht; und
Hinzufügen der Signaldaten zu einer in dem aktiven Blattzusammenfassungsknoten gespeicherten Propagationsliste.

10. Verfahren nach Anspruch 9, wobei das Propagieren der entsprechenden Zusammenfassungsdatenstruktur zu allen Zusammenfassungsknoten höherer Ebene, von denen der aktive Blattzusammenfassungsknoten ein Abkömmling ist, auf jeder Ebene Folgendes umfasst:
als Reaktion auf den Empfang einer Propagationsliste von der Abkömmlingsebene, für jedes in der Propagationsliste gespeicherte Signal:
wenn die Start- und Endzeit dieses Signals innerhalb der Zusammenfassungsknotenperiode des aktiven Zusammenfassungsknotens auf dieser Ebene liegen, Hinzufügen der Signaleigenschaftswerte dieses Signals zu der entsprechenden Zusammenfassungsdatenstruktur; oder
andernfalls Hinzufügen dieses Signals zu der Propagationsliste des aktiven Zusammenfassungsknotens auf dieser Ebene und zu dem Intervall, das dieser Ebene entspricht.

11. Verfahren nach einem der Ansprüche 1 bis 10, wobei jeder Zusammenfassungsknoten und jeder detaillierte Knoten erst dann gelesen wird, wenn die aktuelle Zeit nach der entsprechenden Knotenperiode liegt.

12. Verfahren nach einem der Ansprüche 1 bis 11, wobei das Verfahren ferner Folgendes umfasst:
Empfangen einer Abfrage, die Abfragefelder umfasst, wobei die Abfragefelder eine Abfragestartzeit, eine Abfrageendzeit und einen oder mehrere Bereiche von Signaleigenschaften umfassen;
als Reaktion auf die Erfüllung einer Bedingung basierend auf den Abfragefeldern, Verarbeiten der Abfrage unter Verwendung der Zusammenfassungsknoten der Zusammenfassungsdatenbank (SD);
andernfalls Verarbeiten der Abfrage unter Verwendung der detaillierten Knoten der detaillierten Datenbank (DD).

13. Verfahren zum Abfragen einer detaillierten Datenbank (DD) und einer Zusammenfassungsdatenbank (SD), die unter Verwendung des Verfahrens nach einem der Ansprüche 1 bis 12 erzeugt werden, wobei das Verfahren Folgendes umfasst:
Empfangen einer Abfrage, die Abfragefelder umfasst, die eine Abfragestartzeit, eine Abfrageendzeit und einen oder mehrere Bereiche von Signaleigenschaften umfassen, wobei die Differenz zwischen der Abfragestartzeit und der Abfrageendzeit ein Abfragezeitraum ist;
als Reaktion auf die Erfüllung einer Bedingung basierend auf den Abfragefeldern, Verarbeiten der Abfrage unter Verwendung der Zusammenfassungsdatenbank;
andernfalls Verarbeiten der Abfrage unter Verwendung der detaillierten Datenbank.

14. Verfahren nach Anspruch 13, wobei das Verarbeiten der Abfrage unter Verwendung der detaillierten Datenbank (DD) Folgendes umfasst:
ausgehend von der niedrigsten Ebene der detaillierten Datenbank, Durchsuchen zunehmend höherer Ebenen der detaillierten Datenbank und Hinzufügen jedes Signals, das mit allen Abfragefeldern übereinstimmt, zu einem detaillierten Abfrageergebnis;
Ausgeben des detaillierten Abfrageergebnisses;
und/oder wobei das Verarbeiten der Abfrage unter Verwendung der Zusammenfassungsdatenbank (SD) Folgendes umfasst:
Bestimmen, basierend auf dem Abfragezeitraum, einer Abfrageverarbeitungsebene der Zusammenfassungsdatenbank; für jeden Zusammenfassungsknoten auf der Abfrageverarbeitungsebene mit einer Zusammenfassungsknotenperiode, die sich mit dem Abfragezeitraum überschneidet, Hinzufügen eines Eintrags in der entsprechenden Zusammenfassungsdatenstruktur, der mit den Abfragefeldern übereinstimmt, zu einem Zusammenfassungsabfrageergebnis;
Durchsuchen der Hilfsdatenbank (AD) und Hinzufügen von Signalen, die mit den Abfragefeldern übereinstimmen, zu dem Zusammenfassungsabfrageergebnis;
Ausgeben des Zusammenfassungsabfrageergebnisses.

15. Einrichtung (1), die zu Folgendem ausgelegt ist:
Empfangen (S1) einer Zeitreihe von Funkdaten (E(t));
für jede von mehreren Pufferperioden, am Ende einer zuletzt verstrichenen Pufferperiode, Analysieren der Funkdaten dieser Pufferperiode, um Signale zu detektieren (S2);
als Reaktion auf das Detektieren eines oder mehrerer Signale, die innerhalb dieser Pufferperiode enden (S4):
Bestimmen einer Startzeit und einer Endzeit dieses Signals und einer oder mehrerer Signaleigenschaften (p₁, ..., p_{P}), die diesem Signal entsprechen, wobei die Signaleigenschaften mindestens eine Dauer beinhalten;
Speichern (S5) dieses Signals in einer detaillierten Datenbank (DD) und einer Zusammenfassungsdatenbank (SD); wobei die detaillierte Datenbank mehrere Ebenen umfasst, wobei jede Ebene einen oder mehrere detaillierte Knoten umfasst, wobei die detaillierten Knoten innerhalb jeder Ebene die Zeit in aufeinanderfolgende Perioden detaillierter Knoten unterteilen, wobei das Speichern eines Signals in der detaillierten Datenbank Speichern der diesem Signal entsprechenden Signaleigenschaften in den detaillierten Knoten der niedrigsten verfügbaren Ebene, der einer die Startzeit und Endzeit dieses Signals einschließenden Periode eines detaillierten Knotens entspricht, umfasst;
wobei die Zusammenfassungsdatenbank eine Hilfsdatenbank (AD) und eine Baumstruktur von Zusammenfassungsknoten mit mehreren Ebenen umfasst, wobei die Zusammenfassungsknoten auf jeder Ebene aufeinanderfolgenden Zusammenfassungsknotenperioden gleicher Länge entsprechen, wobei jeder Zusammenfassungsknoten eine Zusammenfassungsdatenstruktur speichert, die für jede eindeutige Kombination quantisierter Signaleigenschaftswerte einen Zählwert der Anzahl von der jeweiligen Zusammenfassungsknotenperiode entsprechenden Signalen speichert, die diese eindeutige Kombination quantisierter Signaleigenschaftswerte aufweisen;
wobei das Speichern eines Signals in der Zusammenfassungsdatenbank auf jeder Ebene der Zusammenfassungsdatenbank Folgendes umfasst:
Aktualisieren, basierend auf den Signaleigenschaften, der Zusammenfassungsdatenstrukturen eines oder mehrerer Zusammenfassungsknoten, deren Zusammenfassungsknotenperioden sich mit der Dauer dieses Signals überschneiden; oder
Speichern der Signaleigenschaften, die diesem Signal entsprechen, in der Hilfsdatenbank.

## Revendications

1. Procédé comprenant les étapes suivantes :
recevoir (S1) une série chronologique de données radio (E(t)) ;
pour chacune d'une pluralité de périodes de mise en tampon, à la fin de la période de mise en tampon écoulée la plus récemment, analyser les données radio de cette période de mise en tampon pour détecter des signaux (S2) ;
en réponse à la détection d'un ou de plusieurs signaux se terminant dans cette période de mise en tampon (S4) :
déterminer un temps de début et un temps de fin de ce signal, ainsi qu'une ou plusieurs propriétés de signal (p₁, ..., p_{P}) correspondant à ce signal, les propriétés de signal comprenant au moins une durée ;
stocker (S5) ce signal dans une base de données détaillée (DD) et une base de données de synthèse (SD) ;
où la base de données détaillée comprend une pluralité de niveaux, chaque niveau comprenant un ou plusieurs nœuds détaillés, les nœuds détaillés de chaque niveau subdivisant le temps en périodes de nœuds détaillées consécutives, le stockage d'un signal dans la base de données détaillée comprenant le stockage des propriétés de signal correspondant à ce signal dans le nœud détaillé disponible de niveau le plus bas correspondant à une période de nœud détaillé englobant le temps de début et le temps de fin de ce signal ;
où la base de données de synthèse comprend une base de données auxiliaire (AD) et une structure arborescente de nœuds de synthèse ayant une pluralité de niveaux, les nœuds de synthèse à chaque niveau correspondant à des périodes consécutives de nœuds de synthèse de longueur égale, chaque nœud de synthèse stockant une structure de données de synthèse qui stocke, pour chaque combinaison unique de valeurs de propriétés de signal quantifiées, un comptage du nombre de signaux correspondant à la période respective du nœud de synthèse qui ont cette combinaison unique de valeurs de propriétés de signaux quantifiées ;
où le stockage d'un signal dans la base de données de synthèse comprend, à chaque niveau de la base de données de synthèse :
la mise à jour, sur la base des propriétés du signal, des structures de données de synthèse d'un ou de plusieurs nœuds de synthèse ayant des périodes de nœuds de synthèse chevauchant la durée de ce signal ; ou
le stockage des propriétés de signal correspondant à ce signal dans la base de données auxiliaire.

2. Procédé selon la revendication 1, dans lequel la série chronologique de données radio (E(t)) est reçue (S1) et stockée en temps réel, où la détection de signaux (S2) et le stockage (S5) de signaux détectés dans la base de données détaillée (DD) et la base de données de synthèse (SD) se produisent à la fin de chaque période de mise en tampon sans interrompre la réception et le stockage de la série chronologique de données radio.

3. Procédé selon la revendication 1 ou 2, dans lequel les propriétés de signal (p₁, ..., p_{P}) comprennent en outre une ou plusieurs des propriétés suivantes :
la fréquence minimale ;
la fréquence maximale ;
la largeur de bande du signal ;
la fréquence centrale ; et/ou
la puissance de signal intégrée.

4. Procédé selon l'une quelconque des revendications 1 à 3, dans lequel chaque nœud détaillé stocke jusqu'à un nombre seuil de signaux ;
éventuellement, dans lequel le nombre seuil de signaux pour chaque nœud détaillé dépend du niveau correspondant de ce nœud détaillé.

5. Procédé selon la revendication 4, dans lequel chaque niveau de la base de données détaillée (DD) comprend un nœud détaillé actif ayant un temps de début de nœud, et un nombre quelconque de nœuds détaillés fermés, chacun ayant un temps de début de nœud et un temps de fin de nœud définissant la période de nœud détaillée correspondante ;
où le stockage (S5) d'un signal dans la base de données détaillée comprend les étapes suivantes :
en commençant par le niveau le plus bas de la base de données détaillée, rechercher des niveaux croissants successifs de la base de données détaillée jusqu'à ce qu'un nœud détaillé actif au niveau recherché ait un temps de début de nœud qui se situe avant le temps de début de ce signal et, en réponse :
stocker ce signal sur le nœud détaillé actif au niveau recherché ; et
en réponse au fait que le nœud détaillé actif, au niveau recherché, stocke maintenant un nombre de signaux égal au nombre seuil correspondant de signaux :
fermer le nœud détaillé actif au niveau recherché, en attribuant le temps de fin de ce signal comme temps de fin du nœud ; et
ouvrir un nouveau nœud détaillé actif au niveau recherché, assigner le temps de fin de ce signal comme temps de début du nœud.

6. Procédé selon l'une quelconque des revendications 1 à 5, dans lequel le stockage (S5) d'un signal dans la base de données détaillée (DD) comprend en outre le stockage de la série chronologique correspondante de données radio dans le même nœud détaillé que les propriétés du signal.

7. Procédé selon l'une quelconque des revendications 1 à 6, dans lequel la base de données de synthèse (SD) comprend, au niveau le plus bas, jusqu'à un nombre N_{b} de nœuds de synthèse feuilles actifs correspondant à une période de mise en tampon de synthèse, et un nombre quelconque de nœuds de synthèse feuilles fermés correspondant à des périodes de nœuds de synthèse antérieures ;
où le stockage d'un signal dans la base de données de synthèse comprend les étapes suivantes :
a. en réponse aux temps de début et de fin de ce signal se situant entièrement dans la période de mise en tampon de synthèse, mettre à jour, sur la base des valeurs de propriété de signal de ce signal, les structures de données de synthèse de chaque nœud de synthèse feuille actif ayant une période de nœud de synthèse chevauchant la durée de ce signal ;
b. en réponse au temps de fin de ce signal se situant dans la période de mise en tampon de synthèse et au temps de début de ce signal précédant la période de mise en tampon de synthèse, stocker les propriétés de signal (p₁, ..., p_{P}) correspondant au signal dans la base de données auxiliaire (AD) ;
c. en réponse au temps de fin de ce signal étant postérieur à la période de mise en tampon de synthèse :
fermer le nœud de synthèse feuille actif le plus ancien et propager la structure de données de synthèse correspondante à tous les nœuds de synthèse de niveau supérieur, dont le nœud de synthèse feuille actif le plus ancien est un descendant, chaque nœud de synthèse ne comptant ce signal qu'une seule fois dans la structure de données de synthèse respective ;
ouvrir un nouveau nœud de synthèse feuille actif en tant que nœud de synthèse feuille actif le plus récent dans la période de mise en tampon de synthèse ;
d. où les étapes a. à c. sont répétées jusqu'à ce que :
soit les valeurs de propriété de signal du signal sont ajoutées à chaque nœud de synthèse feuille actif ayant une période de nœud de synthèse chevauchant la durée de ce signal ; soit
les propriétés de signal correspondant à ce signal sont stockées dans la base de données auxiliaire.

8. Procédé selon l'une quelconque des revendications 1 à 6, dans lequel chaque niveau de la base de données de synthèse (SD) comprend un nœud de synthèse actif ayant un temps de début de nœud, et un nombre quelconque de nœuds détaillés fermés, où le nœud de synthèse actif est le plus récent, chaque nœud de synthèse ayant un temps de début de nœud et un temps de fin de nœud définissant la période de nœud de synthèse correspondante ;
où la base de données auxiliaire (AD) comprend une structure d'intervalle correspondant à chaque niveau de la base de données de synthèse ;
où le stockage d'un signal dans la base de données de synthèse comprend, à partir du niveau le plus bas, la recherche de niveaux croissants successifs de la base de données de synthèse, à chaque niveau :
e. en réponse aux temps de début et de fin de ce signal se situant dans la période de nœud de synthèse correspondant au nœud de synthèse actif au niveau recherché, ajouter les valeurs de propriété de signal (p₁, ..., p_{P}) de ce signal à la structure de données de synthèse du nœud de synthèse actif au niveau recherché ;
f. en réponse au fait que le temps de début de ce signal se situe dans la période de nœud de synthèse correspondant au nœud de synthèse actif au niveau recherché et que le temps de fin se situe en dehors de la période du nœud de synthèse :
fermer le nœud de synthèse actif au niveau recherché et propager la structure de données de synthèse correspondante à tous les nœuds de synthèse de niveau supérieur dont le nœud de synthèse actif au niveau recherché est un descendant ;
ouvrir un nouveau nœud de synthèse actif au niveau recherché et retourner à l'étape e. ;
g. en réponse au fait que le temps de fin du signal se situe dans la période de nœud de synthèse correspondant au nœud de synthèse actif au niveau recherché et que le temps de début se situe en dehors de la période de nœud de synthèse :
ajouter les données de signal (14) à la structure d'intervalle correspondant au niveau recherché ; et
augmenter le niveau recherché d'une unité.

9. Procédé selon l'une quelconque des revendications 1 à 6, dans lequel chaque niveau de la base de données de synthèse (SD) comprend un nœud de synthèse actif ayant un temps de début de nœud, et un nombre quelconque de nœuds détaillés fermés, où le nœud de synthèse actif est le plus récent, chaque nœud de synthèse ayant un temps de début de nœud et un temps de fin de nœud définissant la période de nœud de synthèse correspondante ;
où la base de données auxiliaire (AD) comprend une structure d'intervalle correspondant à chaque niveau de la base de données de synthèse ;
où le stockage d'un signal dans la base de données de synthèse comprend les étapes suivantes :
h. en réponse aux temps de début et de fin de ce signal se situant dans la période de nœud de synthèse correspondant au nœud de synthèse feuille actif, ajouter les valeurs de propriété de signal (p₁, ..., p_{P}) du signal à la structure de données de synthèse du nœud de synthèse feuille actif ;
i. en réponse au fait que le temps de début de ce signal se situe dans la période de nœud de synthèse correspondant au nœud de synthèse actif au niveau recherché et que le temps de fin se situe en dehors de la période du nœud de synthèse :
fermer le nœud de synthèse feuille récent actif et propager la structure de données de synthèse correspondante à tous les nœuds de synthèse de niveau supérieur dont le nœud de synthèse feuille actif est un descendant ;
ouvrir un nouveau nœud de synthèse feuille actif et retourner à l'étape h. ;
j. en réponse au fait que le temps de fin du signal se situe dans la période de nœud de synthèse correspondant au nœud de synthèse actif au niveau recherché et que le temps de début se situe en dehors de la période de nœud de synthèse :
ajouter les données de signal (14) à la structure d'intervalle correspondant au niveau feuille ; et
ajouter les données de signal à une liste de propagation stockée dans le nœud de synthèse feuille actif.

10. Procédé selon la revendication 9, dans lequel la propagation de la structure de données de synthèse correspondante à tous les nœuds de synthèse de niveau supérieur dont le nœud de synthèse feuille actif est un descendant comprend, à chaque niveau, les étapes suivantes :
en réponse à la réception d'une liste de propagation depuis le niveau descendant, pour chaque signal stocké dans la liste de propagation :
si le temps de début et le temps de fin de ce signal se situent dans la période de nœud de synthèse du nœud de synthèse actif à ce niveau, ajouter les valeurs de propriété de signal de ce signal à la structure de données de synthèse correspondante ; ou
sinon, ajouter ce signal à la liste de propagation du nœud de synthèse actif à ce niveau et à l'intervalle correspondant à ce niveau.

11. Procédé selon l'une quelconque des revendications 1 à 10, dans lequel chaque nœud de synthèse et chaque nœud détaillé est lu seulement une fois que le temps courant est postérieur à la période de nœud respective correspondante.

12. Procédé selon l'une quelconque des revendications 1 à 11, le procédé comprenant en outre les étapes suivantes :
recevoir une requête comprenant des champs de requête, les champs de requête comprenant un temps de début de requête, un temps de fin de requête et une ou plusieurs plages de propriétés de signal ;
en réponse au respect d'une condition basée sur les champs de requête, traiter la requête à l'aide des nœuds de synthèse de la base de données de synthèse (SD) ;
sinon, traiter la requête à l'aide des nœuds détaillés de la base de données détaillée (DD).

13. Procédé d'interrogation d'une base de données détaillée (DD) et d'une base de données de synthèse (SD) générées en utilisant le procédé selon l'une quelconque des revendications 1 à 12, le procédé comprenant les étapes suivantes :
recevoir une requête comprenant des champs de requête, les champs de requête comprenant un temps de début de requête, un temps de fin de requête et une ou plusieurs plages de propriétés de signal, la différence entre le temps de début de requête et le temps de fin de requête étant une période de temps de requête ;
en réponse au respect d'une condition basée sur les champs de requête, traiter la requête à l'aide de la base de données de synthèse ;
sinon, traiter la requête à l'aide de la base de données détaillée.

14. Procédé selon la revendication 13, dans lequel le traitement de la requête en utilisant la base de données détaillée (DD) comprend les étapes suivantes :
en commençant par le niveau le plus bas de la base de données détaillée, rechercher des niveaux croissants successifs de la base de données détaillée et ajouter à un résultat de requête détaillé chaque signal qui correspond à tous les champs de requête ;
délivrer en sortie le résultat de requête détaillé ;
et/ou dans lequel le traitement de la requête à l'aide de la base de données de synthèse (SD) comprend les étapes suivantes :
déterminer, sur la base de la période de temps de requête, un niveau de traitement de requête de la base de données de synthèse ;
pour chaque nœud de synthèse au niveau du traitement de requête dont la période de nœud de synthèse chevauche la période de temps de requête, ajouter à un résultat de requête de synthèse toute entrée dans la structure de données de synthèses correspondante qui correspond aux champs de la requête ;
rechercher dans la base de données auxiliaire (AD) et ajouter tout signal correspondant aux champs de la requête au résultat de requête de synthèse ;
délivrer en sortie le résultat de requête de synthèse.

15. Appareil (1) configuré :
pour recevoir (S1) une série chronologique de données radio (E(t)) ;
pour chacune d'une pluralité de périodes de mise en tampon, à la fin de la période de mise en tampon écoulée la plus récemment, pour analyser les données radio de cette période de mise en tampon pour détecter des signaux (S2) ;
en réponse à la détection d'un ou de plusieurs signaux se terminant dans cette période de mise en tampon (S4) :
pour déterminer un temps de début et un temps de fin de ce signal, ainsi qu'une ou plusieurs propriétés de signal (p₁, ..., p_{P}) correspondant à ce signal, les propriétés de signal comprenant au moins une durée ;
pour stocker (S5) ce signal dans une base de données détaillée (DD) et une base de données de synthèse (SD) ; où la base de données détaillée comprend une pluralité de niveaux, chaque niveau comprenant un ou plusieurs nœuds détaillés, les nœuds détaillés de chaque niveau subdivisant le temps en périodes de nœuds détaillées consécutives, le stockage d'un signal dans la base de données détaillée comprenant le stockage des propriétés de signal correspondant à ce signal dans le nœud détaillé disponible de niveau le plus bas correspondant à une période de nœud détaillé englobant le temps de début et le temps de fin de ce signal ;
où la base de données de synthèse comprend une base de données auxiliaire (AD) et une structure arborescente de nœuds de synthèse ayant une pluralité de niveaux, les nœuds de synthèse à chaque niveau correspondant à des périodes consécutives de nœuds de synthèse de longueur égale, chaque nœud de synthèse stockant une structure de données de synthèse qui stocke, pour chaque combinaison unique de valeurs de propriétés de signal quantifiées, un comptage du nombre de signaux correspondant à la période respective du nœud de synthèse qui ont cette combinaison unique de valeurs de propriétés de signaux quantifiées ;
où le stockage d'un signal dans la base de données de synthèse comprend, à chaque niveau de la base de données de synthèse :
la mise à jour, sur la base des propriétés du signal, des structures de données de synthèse d'un ou de plusieurs nœuds de synthèse ayant des périodes de nœuds de synthèse chevauchant la durée de ce signal ; ou
le stockage des propriétés de signal correspondant à ce signal dans la base de données auxiliaire.
